# EUROPEAN PATENT SPECIFICATION

(11) **EP 2 801 604 B1**
(45) Date of publication and mention of the grant of the patent: **12.04.2017**
(21) Application number: 13305596.2
(22) Date of filing: 07.05.2013
(51) Int. Cl.: C11C 1/08, B01D 15/18

(54) **Chromatographic process for the production of highly purified polyunsaturated fatty acids**
Chromatographisches Verfahren zur Herstellung von hochreinen, mehrfach ungesättigten Fettsäuren
Procédé chromatographique pour la production d'acides gras polyinsaturés hautement purifiés

(43) Date of publication of application: 12.11.2014
(73) Proprietor: Groupe Novasep, 54340 Pompey (FR)
(72) Inventor: Valéry, Eric, 54425 Saulxures les Nancy (FR); Adam, Philippe, 54320 Maxéville (FR); Bléhaut, Jean, 54000 Nancy (FR)
(74) Representative: August & Debouzy avocats

(56) References cited:
- WO-A1-2013/005051
- US-A- 4 189 442
- US-A- 4 797 233
- US-A- 5 719 302
- US-A1- 2003 222 024
- US-A1- 2005 245 405
- YAMAMURA ET AL: "INDUSTRIAL HIGH-PERFORMANCE LIQUID CHROMATOGRAPHY PURIFICATION OF DOCOSAHEXAENOIC ACID ETHYL ESTER AND DOCOSAPENTAENOIC ACID ETHYL ESTER FRO MSINGLE-CELL OIL", JOURNAL OF THE AMERICAN OIL CHEMISTS' SOCIETY, SPRINGER, DE, vol. 74, no. 11, 30 July 1997 (1997-07-30) , pages 1435-1440, XP002166746, ISSN: 0003-021X, DOI: 10.1007/S11746-997-0250-6
- Mitten, Jeff: "Large-Scale Chromatography: The Green Paradox", 30 May 2008 (2008-05-30), Novasep Process, New Haven, CT, USA * Slides 13 and 14 *
- DAPREMONT, OLIVIER: "Evolution of Continuous Chromatography: Moving Beyond Chiral Separations", CPHL/ICSE SUPPLEMENT: API SYNTHESIS, FORMULATION DEVELOPMENT, AND MANUFACTURING, 30 September 2010 (2010-09-30),
- CERMAK, STEVEN C. ET AL: "Distillation of Natural Fatty Acids and Their Chemical Derivatives", DISTILLATION - ADVANCES FROM MODELING TO APPLICATIONS, 31 March 2012 (2012-03-31),
- STEPNOWSKI P ET AL: "Total recycling of chromatographic solvents-applied management of methanol and acetonitrile waste", RESOURCES CONSERVATION AND RECYCLING, ELSEVIER SCIENCE PUBLISHER, AMSTERDAM, NL, vol. 35, no. 3, 1 May 2002 (2002-05-01), pages 163-175, XP004349741, ISSN: 0921-3449, DOI: 10.1016/S0921-3449(01)00119-7

## Description

### TECHNICAL FIELD

The present invention relates to a chromatographic process for the production of highly purified polyunsaturated fatty acids and their derivatives.

### TECHNICAL BACKGROUND

This section provides background information related to the present disclosure which is not necessarily prior art.

Fatty acids (FAs), and more particularly polyunsaturated fatty acids (PUFAs), as well as their derivatives, are important biological compounds which are components of cellular membranes and which are involved in numerous biological processes, such as the synthesis of hormones (such as prostaglandins) which play a role in platelet aggregation, inflammation, reduction in the triglyceride level, immunological response, etc.

An increasingly large number of drugs based on PUFAs are being developed and commercialized. Some PUFAs have very specific functions. For example:
- Arachidonic acid or ARA (C20 6ω3) is known to be necessary for muscle growth and repair
- Docosahexanoic acid or DHA (C22 6ω3) is known in particular for playing an important role in brain development and neurotransmission.
- Eicosapentaenoic acid or EPA (C20 5ω3) is known for lowering triglycerides. In particular some clinical studies have shown that pure EPA decrease triglycerides levels without raising low density lipoprotein (LDL, so-called "*bad*") cholesterol levels.
- Docosapentaenoic acid or DPA (C22 5ω3) is known for improving cardiovascular health.

Some other studies have shown that mixtures of EPA and DHA, while lowering triglycerides, increase LDL.

Therefore, there is a need for producing compositions comprising EPA and containing less than 0.5% of DHA, preferably less than 0.05% of DHA, even more preferably having no detectable levels of DHA. Similarly, there is potential interest in producing compositions comprising DHA substantially without ARA, or comprising ARA substantially without DHA, and in general for producing highly purified PUFAs, with compositions which substantially exclude other PUFAs (or other FAs) to enable the development and commercialization of new medicines based on highly purified individual PUFAs having a more controlled efficacy and fewer side effects.

EPA is generally purified from fish oils, algae or yeast for instance. However, fish oil and other biomasses also contain a great number of fatty acids, and in particular large amounts of DHA, that need to be separated from EPA.

DHA may be purified from fish oils, where it is required to separate a large number of other fatty acids including EPA, which is even more abundant than DHA in most oils derived from various fish species. Alternately, DHA may be produced from algae for instance, where ARA is present in sizable quantities, and therefore needs to be separated from ARA. Conversely, when purifying ARA from an algal source, ARA must be separated from DHA.

Methods of production of purified PUFAs are well known by persons skilled in the art. They generally include one or more of a hydrolysis step to convert triglycerides to free fatty acids or a triglyceride transesterification step to convert fatty acids to alkyl (preferably ethyl) esters, a bleaching step, a urea fractionation step, a molecular distillation step, chromatography steps, etc. While molecular distillation is a widely used technique to enrich long chain PUFAs, it cannot be used to efficiently separate long-chain PUFAs from each other. Furthermore, PUFAs are very fragile molecules prone to oxidation and degradation. When heated, PUFAs are prone to isomerization, oxidation, peroxidation and oligomerization.

Chromatography processes are efficient means to enrich PUFAs and may be combined with one or more of the purification techniques discussed above. The most widely described chromatography processes are single column chromatography processes, including for example high performance liquid chromatography (HPLC) processes or steady-state recycling chromatography processes, as well as multicolumn chromatography techniques such as simulated moving bed (SMB), VARICOL™ or actual moving bed (AMB) processes as well as other processes known by the person skilled in the art. Since PUFAs are generally produced in very complex mixtures, two or three chromatographic steps are generally required to reach high purities. Some of these processes are described in the following documents: US 5,719,302, US 2011/0091947, WO 2011/080503, WO 2013/005048, WO 2013/005051, WO 2013/005052. In some SMB or AMB processes enabling the simultaneous performance of two chromatographic steps, one or several streams containing in particular the target PUFA at intermediate purity may be re-injected to a non-adjacent column of the SMB or AMB apparatus without concentration.

Most chromatography processes involve the use of reversed phase mode, using aqueous organic solvents. Fatty acids, generally in the form of esters, are separated according to their polarity, where the more polar fatty acids elute earlier than the less polar ones, as is well known by those of skill in the art.

One of the main drawbacks of chromatography processes is that they lead to a large dilution of purified fractions. Continuous processes such as SMB, VARICOL^{™} and AMB may be preferred over batch processes such as HPLC, because they generally lead to more concentrated streams which are referred to as the extract (containing the more retained compounds), and the raffinate (containing the less retained compounds).

Yet, purified and waste fractions produced by chromatographic separation remain very dilute, so that the various collected streams need to be concentrated so as to recover the used eluents (mainly composed of one or more organic solvents and water) and to recycle them in the process, both for economic and environmental reasons.

Document "Industrial High-Performance Liquid Chromatography Purification of Docosahexaenoic Acid Ethyl Ester and Docosapentaenoic Acid Ethyl Ester from Single-Cell Oil" by Yamamura and Shimomura in JAOCS, vol.74, no.11, p.1435-1440 (1997) teaches a process for purifying two PUFAs, namely DHA and DPA, from an oil starting material. The process includes a step of chromatographic separation using a mixture of methanol and water. The solvent is recovered and recycled in the process.

US2003/0222024 discloses a method and device for chromatographic separation producing at least two fractions, wherein the solvent is at least partially evaporated from the fractions produced and thus separated and reused.

US2005/0245405 discloses a method of preparing fatty acid alkyl esters from fatty acids. Use is made of an acidic resin to convert the fatty acids into esters.

US5,719,302 is directed to a process for recovering a PUFA or mixture of PUFAs from a feed composition, comprising a treatment step based on stationary bed chromatography or multistage countercurrent column fractionation using a fluid at supercritical temperature as a solvent; and then a step of further fractionation by simulated continuous countercurrent moving bed chromatography.

US4,797,233 is directed to a process for separating monoglycerides from di- and triglycerides using an adsorptive chromatographic process in liquid phase.

US4,189,442 discloses the separation of a fatty acid ester mixture according to the degree of unsaturation, using particular resin adsorbent and particular solvent.

WO2013/005051 discloses a chromatographic separation process using an aqueous organic solvent eluent for purifying PUFAs. Part of the raffinate stream can be recycled back to the chromatographic separation unit.

Document "Large-Scale Chromatography: The Green Paradox", 30 May 2008 (2008-05-30), by Novasep Process, New Haven, CT, USA, discloses various chromatographic processes embodying different product concentration and solvent recycling conditions.

Document *"*Evolution of Continuous Chromatography: Moving Beyond Chiral Separations", by Dapremont, in CPhl-ICSE Supplement : API Synthesis, Formulation Development, and Manufacturing, 30 September 2010, discloses SMB processes applied to the separation of enantiomers.

Document *"*Distillation of Natural Fatty Acids and Their Chemical Derivatives", by Cermak, 31 March 2012, discloses distillation of natural fatty acids and their chemical derivatives.

Document *"*Total recycling of chromatographic solvents-applied management of methanol and acetonitrile waste", by Stepnowski, Resources Conservation and Recycling, Elsevier Science Publisher, Amsterdam, NL, vol. 35, no. 3, 1 May 2002, discloses processes with recycling/purification of organic solvents in chromatography. The aim of this document is to get extremely pure solvents, i.e. essentially devoid of water.

There is still generally a need for improved processes for the purification of PUFAs to higher degrees of purity with a limited consumption of solvents.

### SUMMARY OF THE INVENTION

This section provides a general summary of the invention, and is not a comprehensive disclosure of its full scope or all of its features. Specifically disclosed are various embodiments for recovering a polyunsaturated fatty acid from a feed mixture. Processes may optionally include any one or any combination of more than one of the following methods, steps, or features discussed herein.

The invention is defined in the appended set of claims.

The invention in particular relates to the following items.
Item 1. A process for recovering a first polyunsaturated fatty acid from a feed mixture, wherein the feed mixture comprises at least a second fatty acid in addition to the first polyunsaturated fatty acid, the process comprising:
   - performing a main step of chromatographic separation using an aqueous organic eluent and thereby collecting a first stream of eluent enriched in the first polyunsaturated fatty acid and a second stream of eluent enriched in the second fatty acid;
   - subjecting the second stream of eluent to a partial concentration step so as to obtain a stream of concentrated fatty acids on the one hand and a depleted second stream of eluent on the other hand, wherein the water-to-organic ratio of the depleted second stream of eluent is lower than the water-to-organic ratio of the second stream of eluent;
   - recycling at least part of the depleted second stream of eluent for use in the main step of chromatographic separation.
Item 2. The process of item 1, wherein the totality of the depleted second stream of eluent is recycled and used in the main step of chromatographic separation.
Item 3. The process of item 1 or 2, wherein the debit rate of the depleted second stream of eluent is reduced relative to the debit rate of the second stream of eluent, preferably by at least about 2%, or by at least about 5%, or by at least about 10%, or by at least about 15%, relative to the debit rate of the second stream of eluent.
Item 4. The process of any one of items 1 to 3, wherein the water-to-organic ratio of the depleted second stream of eluent is lower than (or equal to) about 0.95 times the water-to-organic ratio of the second stream of eluent, preferably lower than (or equal to) about 0.9 times, or lower than (or equal to) about 0.8 times, or lower than (or equal to) about 0.7 times, or lower than (or equal to) about 0.6 times, or lower than (or equal to) about 0.5 times, or lower than (or equal to) about 0.4 times, or lower than (or equal to) about 0.3 times, or lower than (or equal to) about 0.2 times, or lower than (or equal to) about 0.1 times the water-to-organic ratio of the second stream of eluent.
Item 5. The process of any one of items 1 to 4, comprising:
   - subjecting the first stream of eluent to a concentration step so as to obtain a stream of concentrated fatty acids on the one hand and a depleted first stream of eluent on the other hand, and
   - recycling at least part of, preferably all of, the depleted first stream of eluent, preferably for use in the main step of chromatographic separation.
Item 6. The process of item 5, wherein the debit rate of the depleted first stream of eluent is at least 90%, preferably at least 95%, most preferably at least 98% of the debit rate of the first stream of eluent.
Item 7. The process of any one of items 1 to 6, which comprises a single step of separation, namely the main step of chromatographic separation.
Item 8. The process of any one of items 1 to 6, which comprises a single preliminary step of separation before the main step of chromatographic separation, said single preliminary step of separation being preferably a preliminary step of chromatographic separation, wherein said single preliminary step of chromatographic separation and the main step of chromatographic separation are performed either in a same chromatographic unit or in different chromatographic units.
Item 9. The process of any one of items 1 to 6, which comprises two preliminary steps of separation before the main step of chromatographic separation, wherein preferably one of the two preliminary steps of separation is a preliminary step of chromatographic separation and more preferably both preliminary steps of separation are preliminary steps of chromatographic separation, each preliminary step of chromatographic separation and the main step of chromatographic separation being performed either in a same chromatographic unit or in different chromatographic units, and the two preliminary steps of chromatographic separation being performed either in a same chromatographic unit or in different chromatographic units.
Item 10. The process of item 8 or 9, wherein part of the depleted second stream of eluent is recycled for use in a preliminary step of separation.
Item 11. The process of any one of items 1 to 6 or 8 to 9, which comprises a single further step of separation after the main step of chromatographic separation, said single further step of separation being preferably a further step of chromatographic separation, wherein said single further step of chromatographic separation and the main step of chromatographic separation are performed either in a same chromatographic unit or in different chromatographic units.
Item 12. The process of any one of items 1 to 6 or 8 to 9, which comprises two further steps of separation after the main step of chromatographic separation, wherein preferably one of the two further steps of separation is a further step of chromatographic separation and more preferably both further steps of separation are further steps of chromatographic separation, each further step of chromatographic separation and the main step of chromatographic separation being performed either in a same chromatographic unit or in different chromatographic units, and the two further steps of chromatographic separation being performed either in a same chromatographic unit or in different chromatographic units.
Item 13. The process of any of items 1 to 6, consisting essentially of (or consisting of) three or more steps of chromatographic separations, preferably three steps of chromatographic separations, said steps of chromatographic separations being performed in different chromatographic units or at least partially in a same chromatographic unit.
Item 14. The process of item 13, consisting essentially of (or consisting of) the main step of chromatographic separation, a preliminary step of chromatographic separation performed before the main step of chromatographic separation, as well as a further step of chromatographic separation performed after the main step of chromatographic separation.
Item 15. The process of item 13, consisting essentially of (or consisting of) two preliminary steps of chromatographic separations followed by the main step of chromatographic separation.
Item 16. The process of item 13, consisting essentially of (or consisting of) the main step of chromatographic separation followed by two further steps of chromatographic separation.
Item 17. The process of any one of items 1 to 16, wherein the feed mixture further comprises at least a third fatty acid, and wherein the process comprises:
   - performing a secondary step of chromatographic separation using an aqueous organic eluent and thereby collecting a third stream of eluent enriched in the first polyunsaturated fatty acid and a fourth stream of eluent enriched in the third fatty acid;
   - subjecting the third stream of eluent to a concentration step so as to obtain a stream of concentrated fatty acids on the one hand and a depleted third stream of eluent on the other hand; and then
   - recycling at least part of, preferably all of, the depleted third stream of eluent, preferably for use in the secondary step of chromatographic separation; and/or
   - subjecting the fourth stream of eluent to a concentration step so as to obtain a stream of concentrated fatty acids on the one hand and a depleted fourth stream of eluent on the other hand, the water-to-organic ratio of the depleted fourth stream of eluent being optionally lower than the water-to-organic ratio of the fourth stream of eluent; and then
   - recycling at least part of, preferably all of, the depleted fourth stream of eluent, preferably for use in the secondary step of chromatographic separation.
Item 18. The process of item 17, wherein the secondary step of chromatographic separation is a preliminary step of chromatographic separation performed before the main step of chromatographic separation; or alternatively wherein the secondary step of chromatographic separation is a further step of chromatographic separation performed after the main step of chromatographic separation.
Item 19. The process of item 17 or 18, wherein the same aqueous organic eluent is used in the main step of chromatographic separation and in the secondary step of chromatographic separation; or wherein different aqueous organic eluents are used in the main step of chromatographic separation and in the secondary step of chromatographic separation; and preferably the water-to-organic ratio of the aqueous organic eluent used in the main step of chromatographic separation is different from the water-to-organic ratio of the aqueous organic eluent used in the secondary step of chromatographic separation.
Item 20. The process of any one of items 17 to 19, wherein the feed mixture further comprises at least a fourth fatty acid, and wherein the process comprises:
   - performing a tertiary step of chromatographic separation using an aqueous organic eluent and thereby collecting a fifth stream of eluent enriched in the first polyunsaturated fatty acid and a sixth stream of eluent enriched in the fourth fatty acid;
   - subjecting the fifth stream of eluent to a concentration step so as to obtain a stream of concentrated fatty acids on the one hand and a depleted fifth stream of eluent on the other hand; and then
   - recycling at least part of, preferably all of, the depleted fifth stream of eluent, preferably for use in the tertiary step of chromatographic separation; and/or
   - subjecting the sixth stream of eluent to a concentration step so as to obtain a stream of concentrated fatty acids on the one hand and a depleted sixth stream of eluent on the other hand, the water-to-organic ratio of the depleted sixth stream of eluent being optionally lower than the water-to-organic ratio of the fourth stream of eluent; and then
   - recycling at least part of, preferably all of, the depleted sixth stream of eluent, preferably for use in the tertiary step of chromatographic separation.
Item 21. The process of item 20, wherein the tertiary step of chromatographic separation is a preliminary step of chromatographic separation performed before the main step of chromatographic separation; or alternatively wherein the tertiary step of chromatographic separation is a further step of chromatographic separation performed after the main step of chromatographic separation.
Item 22. The process of item 20 or 21, wherein:
   - the same aqueous organic eluent is used in the main step of chromatographic separation and in the tertiary step of chromatographic separation; or wherein different aqueous organic eluent are used in the main step of chromatographic separation and in the tertiary step of chromatographic separation; and preferably the water-to-organic ratio of the aqueous organic eluent used in the main step of chromatographic separation is different from the water-to-organic ratio of the aqueous organic eluent used in the tertiary step of chromatographic separation; and/or
   - the same aqueous organic eluent is used in the secondary step of chromatographic separation and in the tertiary step of chromatographic separation; or wherein different aqueous organic eluent are used in the secondary step of chromatographic separation and in the tertiary step of chromatographic separation; and preferably the water-to-organic ratio of the aqueous organic eluent used in the secondary step of chromatographic separation is different from the water-to-organic ratio of the aqueous organic eluent used in the tertiary step of chromatographic separation.
Item 23. The process of any one of items 20 to 22, wherein the first polyunsaturated fatty acid is eicosapentaneoic acid, the second fatty acid is docosahexanoic acid or stearidonic acid, and the third and fourth fatty acids are selected from the other of docosahexanoic acid or stearidonic acid, saturated fatty acids and monounsaturated fatty acids.
Item 23a. The process of any one of items 1 to 23, which comprises adding fresh water to the depleted second stream of eluent prior to recycling and using it in the main step of chromatographic separation.
Item 24. A process according to item 1 for recovering a first polyunsaturated fatty acid from a feed mixture, wherein the feed mixture comprises at least a second fatty acid in addition to the first polyunsaturated fatty acid,
   wherein part of the depleted second stream of eluent is recycled for use in another process step other than the main step of chromatographic separation.
   Said other process step may be a step contributing to recovering the first polyunsaturated fatty acid or it may be a step contributing to another purpose, such as the purification or production of another compound.
Item 26. The process of item 24 or 25, wherein part of the depleted second stream of eluent is recycled for use as an eluent in a step of separating a species from another species, preferably a step of chromatographically separating a species from another species, and/or as a fuel, and/or for regenerating a solvent.
Item 27. The process of any one of items 24 to 26, comprising:
   - performing one or more preliminary steps of separation using respective aqueous organic eluents, before the main step of chromatographic separation;
   - recycling part of the depleted second stream of eluent for use in one or more of the preliminary steps of separation.
Item 28. The process of item 27, wherein at least one of the preliminary steps of separation is a step of chromatographic separation, and preferably all of the preliminary steps of separation are steps of chromatographic separation.
Item 30. The process of any one of items 24 to 29, comprising at least one further step of separation after the main step of chromatographic separation, and preferably a single further step of separation, said further step(s) of separation being preferably further step(s) of chromatographic separation.
Item 32. The process of any one of items 24 to 31, comprising a single preliminary step of separation.
Item 33. The process of any one of items 24 to 31, comprising exactly two preliminary steps of separation.
Item 34. The process of any one of items 28 to 33, wherein the main step of chromatographic separation and at least one preliminary step of chromatographic separation are performed in a same chromatographic unit; and/or wherein the main step of chromatographic separation and at least one further step of chromatographic separation are performed in a same chromatographic unit; and/or wherein all preliminary steps of chromatographic separation, all optional further steps of chromatographic separation and the main step of chromatographic separation are performed in different chromatographic units.
Item 35. The process of any one of items 24 to 34, comprising:
   - subjecting the first stream of eluent to a concentration step so as to obtain a stream of concentrated fatty acids on the one hand and a depleted first stream of eluent on the other hand, and
   - recycling at least part of, preferably all of, the depleted first stream of eluent, preferably for use in a step of separation of the process, most preferably the main step of chromatographic separation and/or at least one preliminary step of separation before the main step of chromatographic separation.
Item 36. The process of item 35, wherein the debit rate of the depleted first stream of eluent is at least about 95%, preferably at least about 98% most preferably at least about 99% of the debit rate of the first stream of eluent.
Item 37. The process of any one of items 24 to 36, wherein the feed mixture further comprises at least a third fatty acid, and wherein the process comprises:
   - performing a secondary step of chromatographic separation using an aqueous organic eluent and thereby collecting a third stream of eluent enriched in the first polyunsaturated fatty acid and a fourth stream of eluent enriched in the third fatty acid;
   - subjecting the third stream of eluent to a concentration step so as to obtain a stream of concentrated fatty acids on the one hand and a depleted third stream of eluent on the other hand; and then
   - recycling at least part of, preferably all of, the depleted third stream of eluent, preferably for use in a step of separation of the process, most preferably in the secondary step of chromatographic separation; and/or
   - subjecting the fourth stream of eluent to a concentration step so as to obtain a stream of concentrated fatty acids on the one hand and a depleted fourth stream of eluent on the other hand; and then
   - recycling at least part of, preferably all of, the depleted fourth stream of eluent, preferably for use in a step of separation of the process, most preferably in the secondary step of chromatographic separation.
Item 38. The process of item 37, wherein the secondary step of chromatographic separation is a preliminary step of chromatographic separation performed before the main step of chromatographic separation; or wherein the secondary step of chromatographic separation is a further step of chromatographic separation performed after the main step of chromatographic separation.
Item 39. The process of item 37 or 38, wherein the same aqueous organic eluent is used in the main step of chromatographic separation and in the secondary step of chromatographic separation; or wherein different aqueous organic eluents are used in the main step of chromatographic separation and in the secondary step of chromatographic separation; and preferably the water-to-organic ratio of the aqueous organic eluent used in the main step of chromatographic separation is different from the water-to-organic ratio of the aqueous organic eluent used in the secondary step of chromatographic separation.
Item 40. The process of any one of items 37 to 39, wherein the feed mixture further comprises at least a fourth fatty acid, and wherein the process comprises:
   - performing a tertiary step of chromatographic separation using an aqueous organic eluent and thereby collecting a fifth stream of eluent enriched in the first polyunsaturated fatty acid and a sixth stream of eluent enriched in the fourth fatty acid;
   - subjecting the fifth stream of eluent to a concentration step so as to obtain a stream of concentrated fatty acids on the one hand and a depleted fifth stream of eluent on the other hand; and then
   - recycling at least part of, preferably all of, the depleted fifth stream of eluent, preferably for use in a step of separation of the process, most preferably in the tertiary step of chromatographic separation; and/or
   - subjecting the sixth stream of eluent to a concentration step so as to obtain a stream of concentrated fatty acids on the one hand and a depleted sixth stream of eluent on the other hand; and then
   - recycling at least part of, preferably all of, the depleted sixth stream of eluent, preferably for use in a step of separation of the process, most preferably in the tertiary step of chromatographic separation.
Item 41. The process of item 40, wherein the tertiary step of chromatographic separation is a preliminary step of chromatographic separation performed before the main step of chromatographic separation; or wherein the tertiary step of chromatographic separation is a further step of chromatographic separation performed after the main step of chromatographic separation.
Item 42. The process of item 40 or 41, wherein:
   - the same aqueous organic eluent is used in the main step of chromatographic separation and in the tertiary step of chromatographic separation; or wherein different aqueous organic eluents are used in the main step of chromatographic separation and in the tertiary step of chromatographic separation; and preferably the water-to-organic ratio of the aqueous organic eluent used in the main step of chromatographic separation is different from the water-to-organic ratio of the aqueous organic eluent used in the tertiary step of chromatographic separation; and/or
   - the same aqueous organic eluent is used in the secondary step of chromatographic separation and in the tertiary step of chromatographic separation; or wherein different aqueous organic eluents are used in the secondary step of chromatographic separation and in the tertiary step of chromatographic separation; and preferably the water-to-organic ratio of the aqueous organic eluent used in the secondary step of chromatographic separation is different from the water-to-organic ratio of the aqueous organic eluent used in the tertiary step of chromatographic separation.
Item 44. A process according to any one of items 1 to 23a for recovering a first polyunsaturated fatty acid from a feed mixture, wherein the feed mixture comprises at least a second fatty acid in addition to the first polyunsaturated fatty acid, the process successively comprising:
   - performing a main step of chromatographic separation using an aqueous organic eluent, and thereby collecting a first stream of eluent enriched in the first polyunsaturated fatty acid and a second stream of eluent enriched in the second fatty acid;
   - subjecting the second stream of eluent to a concentration step so as to obtain a stream of concentrated fatty acids on the one hand and a depleted second stream of eluent on the other hand, wherein the debit rate of the depleted second stream of eluent is reduced relative to the debit rate of the second stream of eluent;
   - recycling at least part of the depleted second stream of eluent for use in the main step of chromatographic separation.
Item 45. The process of item 44, wherein the debit rate of the depleted second stream of eluent is reduced by at least about 2%, or by at least about 5%, or by at least about 10%, or by at least about 15%, relative to the debit rate of the second stream of eluent.
Item 67. The process of any one of the preceding items, wherein each concentration step is performed in a membrane filtration apparatus, an evaporator, a rectification column, a distillation column, a liquid-liquid extractor or a combination of those apparatuses.
Item 68. The process of any one of the preceding items wherein the first polyunsaturated fatty acid is recovered at the end of the process in a composition containing less than about 1 wt.%, preferably less than about 0.5 wt.% or less than about 0.1 wt.% or less than about 0.05 wt.% or less than about 0.03 wt.% or less than about 0.01 wt.% of the second fatty acid relative to the total weight of fatty acids in the composition.
Item 69. The process of any one of the preceding items, wherein the first polyunsaturated fatty acid is eicosapentaneoic acid and the second fatty acid is docosahexanoic acid.
Item 70. The process of any one of the preceding items, wherein the first polyunsaturated fatty acid is docosahexanoic acid and the second fatty acid is eicosapentaneoic acid.
Item 71. The process of any one of the preceding items, wherein the first polyunsaturated fatty acid is eicosapentaneoic acid and the second fatty acid is stearidonic acid.
Item 72. The process of any one of the preceding items, wherein the first polyunsaturated fatty acid is docosapentaenoic acid and the second fatty acid is docosahexanoic acid.
Item 73. The process of any one of the preceding items, wherein the first polyunsaturated fatty acid is docosahexanoic acid and the second fatty acid is docosapentaenoic acid.
Item 74. The process of any one of the preceding items, wherein the first polyunsaturated fatty acid is arichidonic acid and the second fatty acid is docosahexanoic acid.
Item 75. The process of any one of the preceding items, wherein the first polyunsaturated fatty acid is docosahexanoic acid and the second fatty acid is arichidonic acid.
Item 76. The process of any one of the preceding items, wherein the feed mixture is derived from fish, algae and/or yeast, preferably from fish.
Item 77. The process of any one of the preceding items, which is a continuous process.
Item 78. The process of any one of the preceding items, wherein at least the main step of chromatographic separation, preferably all steps of chromatographic separation, are steps of simulated moving bed or actual moving bed chromatographic separation.

The present invention enables to overcome the drawbacks of the prior art. In particular the invention provides improved processes for the purification of PUFAs to higher degrees of purity (such as processes for the purification of very pure DHA, or of very pure EPA) with a limited consumption of solvents.

In certain aspects, the invention relies on the surprising finding that, during the concentration of the chromatographic fractions containing undesirable FAs (and in particular undesirable PUFAs) separated from a starting PUFA stream by chromatographic separation, which generally involves the evaporation of the eluent, small but non negligible quantities of such undesirable FAs get entrained into the recycled eluent, thereby contaminating said recycled eluent. As a consequence, the undesirable FAs can contaminate the chromatographic stream containing the desired PUFA, thereby potentially preventing target specifications for undesirable FAs (in particular undesirable PUFAs) in the end product from being reached.

Since FAs have very high boiling points, the entrainment of said FAs into the vapor phase at the concentration stage was particularly unexpected. The present inventors have identified that the FAs (notably PUFAs) are particularly entrained with the water component of the water organic eluent.

In certain aspects, the purpose of the present invention is to reduce or prevent the contamination of the desired PUFA by undesirable FAs upon recycling the eluent(s).

Two analogous solutions are provided to achieve this purpose, both focusing on how to handle the recycling of the eluent recovered from a stream containing at least one undesirable FA which is collected from a chromatographic unit:
- A first solution comprises adjusting the stage of concentrating the stream comprising the undesirable FA before the recycling of the eluent to the chromatographic unit, in order to reduce or prevent the entrainment of said undesirable FA into the collected eluent. More particularly, the adjustment is performed in such a way that the water-to-organic ratio of the recycled eluent is reduced at the concentration stage (relative to the water-to-organic ratio of the stream collected from the chromatographic unit).
- A second solution comprises not completely recycling the eluent to the chromatographic unit from which said eluent was collected, but rather using recycling the eluent and using it for another purpose, and for instance recycling it to another separation unit which is situated upstream of the chromatographic unit from which the eluent was collected. According to this second solution, no specific step is taken to avoid the entrainment of some undesirable FAs with the recycled eluent at the concentration stage, but the recycled eluent is used in the process in such a way that there is no build-up of undesirable FA in said chromatographic unit.

### BRIEF DESCRIPTION OF THE DRAWINGS

**Figure 1** schematically illustrates an example of coupling a chromatographic step with evaporation and solvent recycling means.
**Figure 2** schematically illustrates an example of implementation of the evaporation of a chromatographic stream, using a falling film evaporator with forced circulation.
**Figure 3** schematically illustrates an example of implementation of the concentration of a chromatographic stream, in which one of the evaporated streams is used to evaporate a second stream and reduce overall energy consumption.
**Figure 4** schematically illustrates an example of implementation of the evaporation of a chromatographic stream, comprising an evaporation stage and a stripping stage.
**Figure 5** schematically illustrates an example of implementation of the concentration of a chromatographic stream, comprising a distillation stage.
**Figure 6** schematically illustrates an example of implementation of the concentration of a chromatographic stream, comprising a nanofiltration stage.
**Figure 7** schematically illustrates an example of implementation of the concentration of a chromatographic stream, comprising two sequential nanofiltration stages.
**Figure 8** schematically illustrates an example of implementation of the concentration of a chromatographic stream, comprising a step of liquid-liquid extraction, enabling the separation of concentrated fatty acids from residual water.
**Figure 9** schematically illustrates an example of implementation of the concentration of a chromatographic stream, comprising an evaporation stage and a nanofiltration stage.
**Figure 10** schematically illustrates an example of implementation of the concentration of a chromatographic stream, allowing a reduced overall energy consumption, comprising an evaporation stage and a nanofiltration stage.
**Figure 11** schematically illustrates an example of implementation of the first solution of the invention.
**Figure 12** schematically illustrates an example not according to the invention of implementation of the second solution of the invention.
**Figure 13** schematically illustrates another example of implementation of the second solution of the invention.

### DETAILED DESCRIPTION OF EMBODIMENTS

The invention will now be described in more detail without limitation in the following description. Unless specified otherwise, all concentrations and ratios are expressed by weight.

Although the terms first, second, third, etc. may be used herein to describe various elements, components, sections or the like, these elements, components, sections or the like should not be limited by these terms. These terms may be only used to distinguish one element, component, section or the like from element, component, section. Terms such as "first," "second," and other numerical terms when used herein do not imply a sequence or order unless clearly indicated by the context. Thus, a first element, component, section or the like discussed below could be termed a second element, component, section or the like without departing from the teachings of the example embodiments.

### Outline of the purification process

The explanations provided in this section apply both to the first solution and to the second solution of the invention.

The process of the invention is a process for recovering a first (desired) PUFA from a feed mixture. The feed mixture also comprises at least a second (undesirable) FA (preferably a second, undesirable, PUFA), and preferably comprises a number of other (undesirable) FAs, such as saturated or monounsaturated fatty acids and other PUFAs as well as potentially other impurities.

The feed mixture can be a mixture of fatty acids which is derived from fish, algae and/or yeast, preferably from fish. It can be a raw material, such as for instance fish oil, or algal oil. It can also be a product derived from the above raw materials, and for instance derived from fish oil, algal oil and/or yeast oil. By "*product derived from a raw material*" is meant a raw material which has been subjected to one or more treatment steps. Said treatment steps can include one or more separation or purification steps (such as a fractionation), and/or a hydrolysis step to convert triglycerides to free fatty acids, and/or a triglyceride transesterification step to convert fatty acids to alkyl (preferably ethyl) esters, and/or a bleaching step, and/or a urea fractionation step, and/or a molecular distillation step, and/or one or more chromatographic separation steps, etc.

Preferably, the feed mixture is a product which has been esterified or transesterified, such as a transesterified fish oil, algal oil and/or yeast oil.

Accordingly, each of the fatty acids (and in particular each of the PUFAs) obtained or used in the process of the invention can be a fatty acid derivative, notably in the form of a mono-, di- or tri-glyceride, ester, phospholipid, amide, lactone, or salt. Triglycerides and esters are preferred. Esters are more preferred. Esters are typically alkyl esters, preferably C1-C6 alkyl esters, more preferably C1-C4 alkyl esters. Examples of esters include methyl and ethyl esters. Ethyl esters are most preferred.

The process of the invention involves one main step of chromatographic separation.

The term "*main*" in the above expression is used solely to formally distinguish the chromatographic separation at stake from other potential separation steps in the process (which are called preliminary steps of separation, further steps of separation, or secondary or tertiary steps of separation in the present application). It does not necessarily mean that the chromatographic separation at stake is more important, or achieves a larger part of the purification process, or has a higher throughput than other potential separation steps of the process.

In the context of the present application, a chromatographic separation involves the separation of species entrained in a liquid phase, due to different interactions of some of the species with an adsorbent bed.

A chromatographic separation can be a continuous, semi-continuous or batch separation.

Each step of chromatographic separation mentioned in the application is performed in a chromatographic unit. The chromatographic unit used for performing the main step of chromatographic separation is referred to as the main chromatographic unit.

The term *"chromatographic unit*" designates either a single column chromatography system or a multicolumn chromatography system.

Examples of single column chromatography systems include HPLC or CYCLOJET™ (also referred to as steady-state recycling) systems. Examples of multicolumn column chromatography systems include SMB, iSMB, AMB, VARICOL™, MODICON™, POWERFEED™, MCSGP or GSSR (multicolumn gradient chromatography) systems.

The CYCLOJET™ system is as described in document US 6,063,284. It is a single-column, discontinuous chromatographic separation system wherein the separated (i) more retained and then (ii) less retained species are separately collected at the outlet of the column, the non-separated portion of the chromatogram being recycled through the main pump, and the mixture to be separated is periodically injected by means of an injection loop substantially in the middle of the recycled portion of the chromatogram. After several chromatographic cycles, the process reaches a periodical steady-state wherein the quantity of products injected equals the quantity of separated products collected separately at the outlet of the column.

A variant of the CYCLOJET™ system based on two columns is described in document US 5,630,943. An SMB system is comprised of a number of individual columns containing adsorbent which are connected together in series. An eluent is passed through the columns in a first direction. The injection points of the feedstock and the eluent, and the separated component collection points in the system, are periodically and simultaneously shifted by means of a series of valves. The overall effect is to simulate the operation of a single column containing a moving bed of the solid adsorbent, the solid adsorbent moving in a countercurrent direction to the flow of eluent. Thus, an SMB system consists of columns which, as in a conventional stationary bed system, contain stationary beds of solid adsorbent through which eluent is passed, but in an SMB system the operation is such as to simulate a continuous countercurrent moving bed.

The most traditional form of SMB system is the four-zone SMB system. Other forms are the three-zone SMB system and the two-zone SMB system (as described in the article *Two Section Simulated Moving Bed Process,* by Kwangnam Lee, in Separation Science and Technology 35(4):519-534, 2000, ). An iSMB system is as described in documents EP 0342629 and US 5,064,539. In an iSMB system, there is one step in which the system operates in a closed loop, without any input / output of material.

Other variants of SMB systems are: the time variable SMB system and POWERFEED™ system, as described in document US 5,102,553 and in the article *PowerFeed operation of simulated moving bed units: changing flow-rates during the switching interval,* by Zhang et al. in Journal of Chromatography A, 1006:87-99, 2003, the MODICON™ system, as described in document US 7,479,228, and the SMB system with internal recirculation, as described in document US 8,282,831. An AMB system is similar in operation to an SMB system. However, rather than shifting the injection points of the feed mixture and the eluent, and the separated component collection points by means of a system of valves, instead a series of adsorption units (i.e. columns) are physically moved relative to the feed and draw-off points. Again, operation is such as to simulate a continuous countercurrent moving bed.

A VARICOL™ chromatography system is as described in documents US 6,136,198, US 6,375,839 US 6,413,419 and US 6,712,973. A VARICOL™ system is comprised of a number of individual adsorbent-containing columns which are connected together in series. An eluent is passed through the columns in a first direction. Contrary to the SMB system, the injection points of the feedstock and the eluent, and the separated component collection points in the system are periodically but asynchronously shifted by means of a series of valves. The overall effect is to create separation zones of variable length over time, thereby allocating stationary phase dynamically in those zones where it is most needed, and thus enabling similar separation power with less chromatographic units and increasing productivity. Contrary to a SMB system, a VARICOL™ system does not simulate the operation of a single column containing a moving bed of the solid adsorbent, the solid adsorbent moving in a countercurrent direction to the flow of eluent, and thus the VARICOL™ operational principle cannot be implemented in an equivalent AMB system.

The process of the invention can comprise a single separation step, which is the abovementioned main step of chromatographic separation.

Alternatively, there can be two separation steps (in total) in the process of the invention, namely the abovementioned main step of chromatographic separation, plus another separation step. According to one embodiment, the other separation step can be performed before the abovementioned main step of chromatographic separation: it can then be referred to as a preliminary step of separation. According to another embodiment, the other separation step can be performed after the abovementioned main step of chromatographic separation: it can then be referred to as a further step of separation.

Alternatively, there can be three separation steps (in total) in the process of the invention, namely the abovementioned main step of chromatographic separation, plus two other separation steps. According to one embodiment, the process comprises the successive steps of (i), a preliminary step of separation, (ii), another preliminary step of separation and (iii), the abovementioned main step of chromatographic separation. According to another embodiment, the process comprises the successive steps of (i), a preliminary step of separation, (ii), the abovementioned main step of chromatographic and (iii), a further step of separation. According to yet another embodiment, the process comprises the successive steps of (i), the abovementioned main step of chromatographic separation, (ii), a further step of separation and (iii), yet a further step of separation.

Alternatively, there can be four separation steps (in total) in the process of the invention, or more than four separation steps, one of the separation step being the abovementioned main step of chromatographic separation, and the other separation steps being either preliminary steps of separation (before the abovementioned main step of chromatographic separation) or further steps of separation (after the abovementioned main step of chromatographic separation).

Each step of separation is performed in a separation unit. The preliminary steps of separation are performed in so-called respective preliminary separation units and the further steps of separation are performed in so-called respective further separation units.

Each preliminary step of separation and each further step of separation can be (independently of the other separation steps) a step of chromatographic separation of the same type as described above - the preliminary separation unit or further separation unit being in this case a chromatographic unit as described above.

Alternatively, each preliminary step of separation and each further step of separation can be (independently of the other separation steps) a non-chromatographic step of separation, such as for instance a step of molecular distillation.

According to one embodiment, the process includes two (and only two) successive separation steps, which can be AMB, SMB or VARICOL™ separation steps (one of these two steps being the abovementioned main step of chromatographic separation).

According to another embodiment, the process includes three (and only three) successive separation steps, which can be AMB, SMB or VARICOL™ separations steps (one of these two steps being the abovementioned main step of chromatographic separation).

According to one embodiment, the process includes three (and only three) successive separation steps, namely a (preliminary) VARICOL™ separation step, followed by the abovementioned main step of chromatographic separation (which can be for instance a CYCLOJET™ separation step or an HPLC separation step), followed by a (further) VARICOL™ separation step.

According to another embodiment, the process includes three (and only three) successive separation steps, namely a (preliminary) VARICOL™ separation step, followed by the abovementioned main step of chromatographic separation (which can be for instance a CYCLOJET™ separation step or an HPLC separation step), followed by a (further) CYCLOJET™ or HPLC separation step.

When the process comprises two or more separation steps, said steps can be conducted simultaneously by using different separation units, or they can be conducted sequentially, by using different separation units or by using the same separation units. In addition, in the case of two separation steps which are chromatographic steps performed in an SMB or AMB system, it is possible to perform these steps simultaneously on a same SMB or AMB system. An example of such simultaneous performance on the same apparatus is described in document WO 2011/080503. Accordingly, some of the separation units used for implementing the above steps of separation can be the same. For instance, the main chromatographic unit and one preliminary separation unit can be one and the same unit; and/or the main chromatographic unit and one further separation unit can be one and the same unit; and/or one preliminary separation unit and another preliminary separation unit can be one and the same unit; and/or one preliminary separation unit and one further separation unit can be one and the same unit; and/or one further separation unit and another further separation unit can be one and the same unit.

Alternatively, all separation units (including the main chromatographic unit) can be distinct.

Each chromatographic separation step (including the main step of chromatographic separation) can be performed on a reverse phase. For instance, use may be made of adsorbents based on weakly polar resins or silica-based stationary phases chemically modified with organic residues such as alkyl (notably C4, C8, C18, C24, C30), phenyl, or other suitable residues as determined by the skilled in the art.

The main step of chromatographic separation is performed using a water organic eluent. A water organic eluent is a mixture of an organic solvent or several organic solvents and water.

Preferably, if other steps of chromatographic separation are present in the process, they are also performed using respective water organic eluents. Alternatively, other steps of chromatographic separation can be performed using a substantially pure organic solvent or a substantially pure mixture of organic solvents.

Organic solvents which can be used in the present invention (notably to form the water organic eluent(s)) are for instance alcohols such as ethanol, propanol, isopropanol and more preferably methanol; ketones such as acetone or methylethyl ketone; nitriles such as acetonitrile; esters such as methylacetate or ethylacetate; furans such as tetrahydrofuran; ethers such as diethylethers or methylethyl ether; and combinations of two or more of the above. Preferred organic solvents are methanol and acetone.

Each water organic eluent is characterized by a water-to-organic ratio, which is the weight ratio of the water component relative to the organic solvent(s) component of the eluent.

The water-to-organic ratio of each water organic eluent can preferably vary between 0.01:99.99 and 30:70, more preferably between 5:95 and 25:75.

When at least two steps of chromatographic separation are present in the process, these steps of chromatographic separation can be performed using eluents having the same composition or different compositions. It is preferred to use eluents having different compositions, and in particular having different water-to-organic ratios, as this makes it possible to adjust the eluting force of the eluent at each separation step and therefore to achieve the separation of different compounds at each step. It may also be preferred to use eluents composed of different organic solvents in the different steps, as this makes it possible to adjust the chromatographic selectivity between certain species to be separated at each separation step and therefore to achieve the separation of different compounds at each step.

The final product obtained owing to the process of the invention contains the purified first PUFA, together with residual impurities. The amount of first PUFA in the final product may for example be greater than or equal to about 80%, preferably greater than or equal to about 90%, or greater than or equal to about 95%, or greater than or equal to about 97%, or greater than or equal to about 98%, or greater than or equal to about 99% (relative to the total amount of fatty acids).

In particular, the final product may contain EPA in an amount of greater than or equal to about 80%, or greater than or equal to about 95%, or greater than or equal to about 97%, or greater than or equal to about 98%, or greater than or equal to about 99% (relative to the total amount of fatty acids); as well as DHA in an amount of less than or equal to about 1%, or less than or equal to about 0.1 %, or less than or equal to about 0.05%, or less than or equal to about 0.03%, or less than or equal to about 0.01%.

A stabilizer, such as tocopherol or the like, can be added to this final product.

### Concentration and recycling of the eluent

The explanations provided in this section apply both to the first solution and to the second solution of the invention.

At the outlet of the main chromatographic unit, at least two streams are collected, namely a first stream of eluent enriched in the first (desired) PUFA and a second stream of eluent enriched in the second (undesirable) FA. For instance, the first stream can be a raffinate and the second stream can be an extract, or vice versa.

The process of the invention comprises at least one concentration step which is performed on the second stream, in a concentration unit. This concentration step provides on the one hand a stream of concentrated FAs, and on the other hand a depleted second stream of eluent. The term "*depleted*" refers to the fact that the second FA (as well as any other fatty acids) has been substantially removed from the eluent. It should also be understood that the expression "*stream of concentrated FAs*" designates a composition comprising a higher concentration of FAs, and in particular of the second FA, than the second stream of eluent before the concentration step. The composition may comprise other fatty acids, and in particular other undesirable fatty acids, as well as some water and/or solvent.

The depleted second stream of eluent is then recycled in the process, in a manner which will be detailed below.

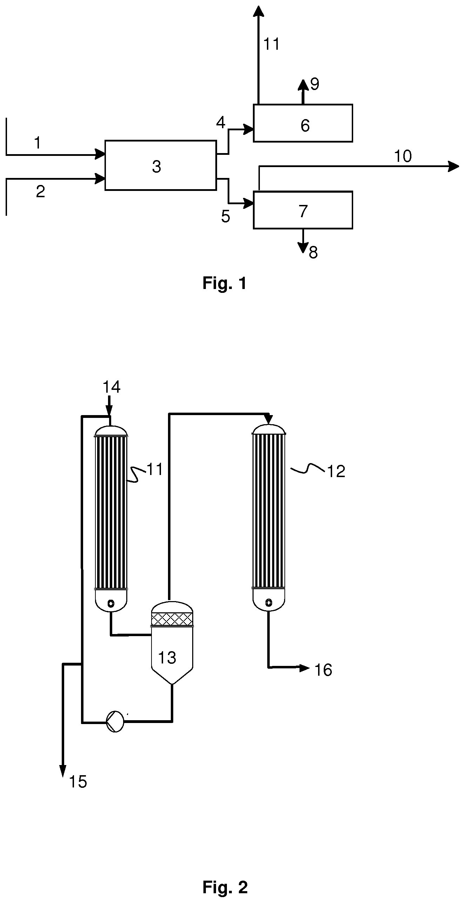

The general principle of the concentration and recycling stages after the main step of chromatographic separation can be better understood by making reference to the general scheme in **Figure 1** (the same principle will also apply to concentration and recycling stages performed after other steps of chromatographic separation, such as preliminary or further steps of chromatographic separation, if such concentration and recycling stages are present).

The main chromatographic unit 3 is fed by an incoming eluent stream 1 and by an incoming feed stream 2. The feed stream 2 can be a stream of the (initial) feed mixture if the main step of chromatographic separation is the first step of the process; otherwise, it can be a stream of an intermediate product if one or more treatment steps such as separation steps have already been performed.

At the outlet of the main chromatographic unit 3, a first stream of eluent enriched in first PUFA 4 and a second stream of eluent enriched in second FA 5 are collected.

The first stream of eluent enriched in first PUFA 4 is fed to a first concentration unit 6, while the second stream of eluent enriched in second FA 5 is fed to a second concentration unit 7.

In each concentration unit 6, 7, the eluent is evaporated and then condensed; it is thereby substantially separated from the all fatty acids. Therefore, a stream of concentrated FAs 9 (containing in particular the first PUFA in concentrated form) is obtained at the outlet of the first concentration unit 6 while another stream of concentrated FAs 8 (containing in particular the second FA in concentrated form) is obtained at the outlet of the second concentration unit 7. Also, a depleted first stream of eluent 11 (*i.e*., depleted in first PUFA and other FAs) is recovered at the outlet of the first concentration unit 6, and a depleted second stream of eluent 10 (*i.e*., depleted in the second FA as well as other FAs) is recovered at the outlet of the second concentration unit 7.

Optionally, the depleted first stream of eluent 11 can be partially or totally recycled to the main chromatographic unit 3 or to any other separation unit used in the process. There is no issue of contamination for this depleted first stream of eluent, since, if the stream is contaminated by any residual PUFA, it will be mainly by the first (desired) PUFA, which will not negatively impact the purity of the final product (first PUFA in purified form).

The depleted second stream of eluent 10 can be partially or totally recycled as well. However, in this case particular steps are taken, according to the invention, to avoid negatively impacting the purity of the final product (first PUFA in purified form) due to some residual second (undesirable) FA being entrained into the depleted second stream of eluent. These particular steps will be detailed below.

The concentration unit used to perform any concentration step can for instance be a falling film evaporator with forced recirculation, a rising evaporator, a flash evaporator, or another type of evaporator known in the art, enabling the evaporation of the eluent components and leaving concentrated fatty acids at the bottom of the device.

Making reference to **Figure 2**, according to one embodiment, a concentration unit comprises a multi-tubular evaporator 11 with forced recirculation, connected to a phase separator 13 and to a condenser 12. A stream of eluent 14 to be concentrated is fed to the evaporator 11. The heated stream exits the evaporator 11 and enters the phase separator 13. At the outlet of the phase separator 13, a stream of concentrated FAs 15 is recovered, and the evaporated eluent is collected and passed to the condenser 12. The eluent vapor is condensed to a liquid form in the condenser 12. At the outlet of the condenser 12, the depleted stream of eluent is collected via a recovery line 16.

Evaporative techniques may be implemented with means known in the art to optimize the level of energy consumption, such as the use of two or more effects, vapor recompression techniques, or for example the use of an evaporated chromatographic stream as a heating fluid for another chromatographic stream.

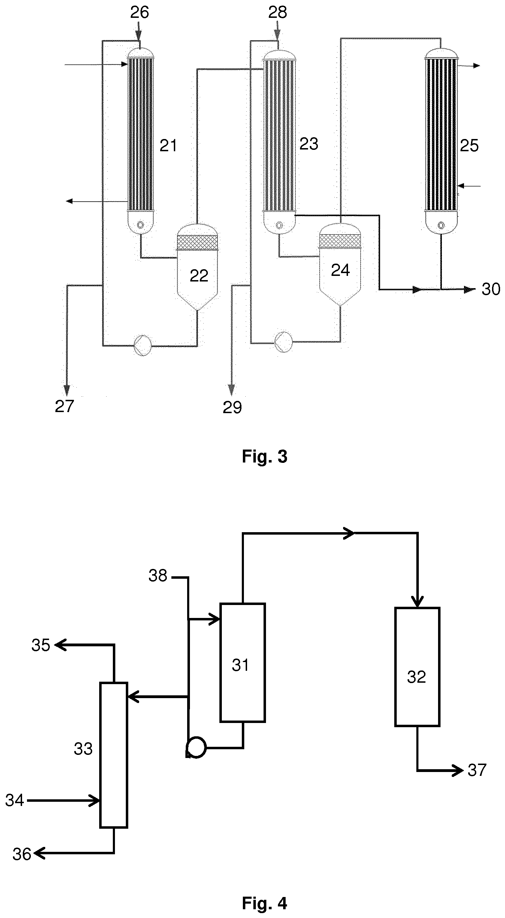

As an example, reference may be made to **Figure 3**. Here, two concentration units are coupled, for example one for treating a first stream of eluent and another one for treating a second stream of eluent (which can *e.g*. be the same as the first stream eluent and the second stream of eluent defined above, or *vice versa*). The first concentration unit comprises a first evaporator 21 linked to a first phase separator 22 and to a first condenser 23. The first stream of eluent 26 is fed to the first evaporator 21. A stream of concentrated fatty acids 27 is recovered at the outlet of the first phase separator 22. A vapor phase is also recovered at the outlet of the first phase separator 22 and passed to the first condenser 23.

The second concentration unit comprises a second evaporator 23 which is the same device as the first condenser 23. This second evaporator 23 is linked to a second phase separator 24 and to a second condenser 25. The second stream of eluent 28 is fed to the second evaporator 23. The evaporation of the second stream of eluent 28 is effected (at least partly) owing to the condensation of the vapor phase from the first concentration unit. A stream of concentrated fatty acids 29 is recovered at the outlet of the second phase separator 24. A vapor phase is also recovered at the outlet of the second phase separator 24 and passed to the second condenser 25.

One or two depleted streams of eluent 30 are recovered respectively at the outlet of the first condenser 23 and of the second condenser 25.

According to one embodiment, an evaporator with forced circulation may be coupled to a batch or continuous stripping column to remove residual eluent in a stream of concentrated fatty acids. For example, making reference to **Figure 4**, a concentration unit may comprise an evaporator 31 coupled on the one hand to a condenser 32 and on the other hand to a stripping column 33. A stream of eluent 38 is fed to the evaporator 31. The vapor phase generated in the evaporator 31 is passed to the condenser 32, and a depleted stream of eluent 37 is recovered at the outlet of the condenser 32. The liquid phase generated in the evaporator 31 is passed to the stripping column 33. A gaseous stream 34 (such as a nitrogen stream) is also fed to the stripping column 33. A stream of concentrated fatty acids 36 as well as a gaseous stream 35 containing residual eluent vapors are collected at respective outlets of the stripping column 33.

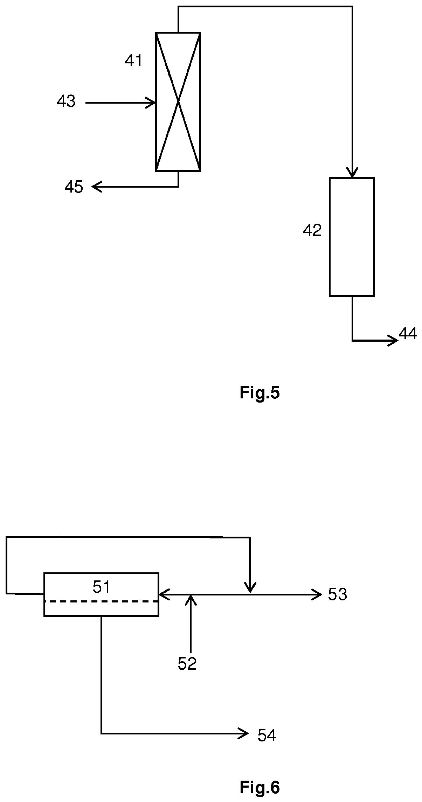

The concentration step may also comprise a distillation step, in which case the concentration unit comprises at least one distillation column. For example, making reference to **Figure 5**, the concentration unit may comprise a distillation column 41 coupled to a condenser 42. A stream of eluent 43 is fed to the distillation column. A vapor phase is recovered at the top of the column and passed to the condenser 42. A depleted stream of eluent 44 is collected at the outlet of the condenser 42. A stream of concentrated fatty acids 45 is collected at the bottom of the distillation column 41.

The concentration step may also comprise a membrane filtration step, such as a nanofiltration step. For example, making reference to **Figure 6**, the concentration unit may comprise a nanofiltration system 51. A stream of eluent 52 is fed to the nanofiltration system 51. A depleted stream of eluent 54 is recovered as the permeate stream. Part of the retentate stream is recycled to the nanofiltration system 51 and part of it is recovered as a stream of concentrated fatty acids 53.

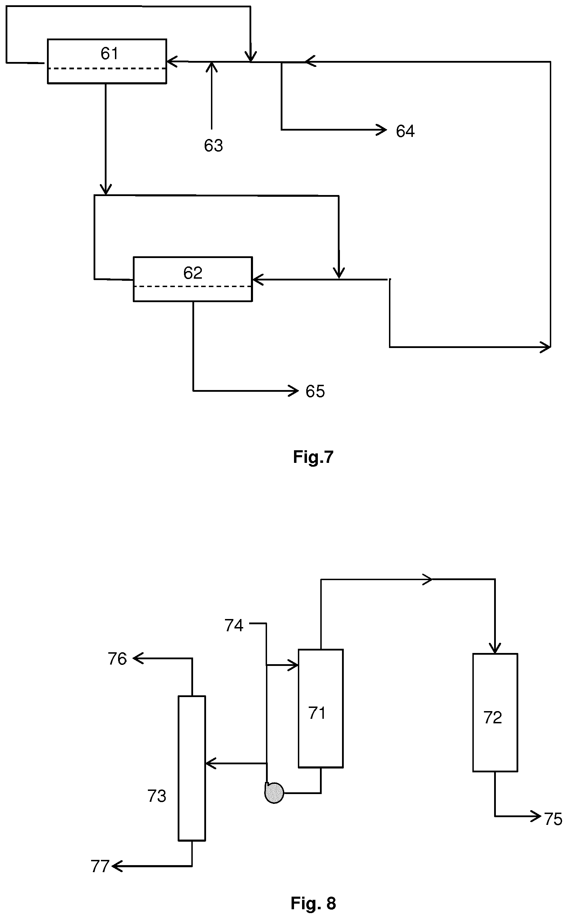

It is also possible to use two membrane filtration steps in series. For instance, making reference to **Figure 7**, the concentration unit may comprise a first nanofiltration system 61 and a second nanofiltration system 62. A stream of eluent 63 is fed to the first nanofiltration system 61. Part of the retentate stream from the first nanofiltration system 61 is recycled to the first nanofiltration system 61 and part of it is recovered as a stream of concentrated fatty acids 64. The permeate stream from the first nanofiltration system 61 is mixed with the retentate stream from the second nanofiltration system 62. Part of this mixed stream is fed to the second nanofiltration system 62 and part of it is mixed with the retentate stream from the first nanofiltration system 61. Finally, a depleted stream of eluent 65 is recovered as the permeate stream from the second nanofiltration system 62.

It is also possible to provide a liquid-liquid extractor in the concentration unit. For instance, making reference to **Figure 8**, the concentration unit may comprise an evaporator 71 coupled to a condenser 72 and a liquid-liquid extractor 73. A stream of eluent 74 is fed to the evaporator 71. The vapor phase from the evaporator 71 is passed to the condenser 72. A depleted stream of eluent 75 is recovered at the outlet of the condenser 72. The liquid phase from the evaporator 71 is partly recycled to the evaporator 71 and partly passed to the liquid-liquid extractor 73. A stream of concentrated fatty acids 76 is recovered at one outlet of the liquid-liquid extractor 73, and a stream of residual water 77 is recovered at the other outlet of the liquid-liquid extractor 73. In an alternate embodiment, the evaporator 71 may be replaced by a distillation column.

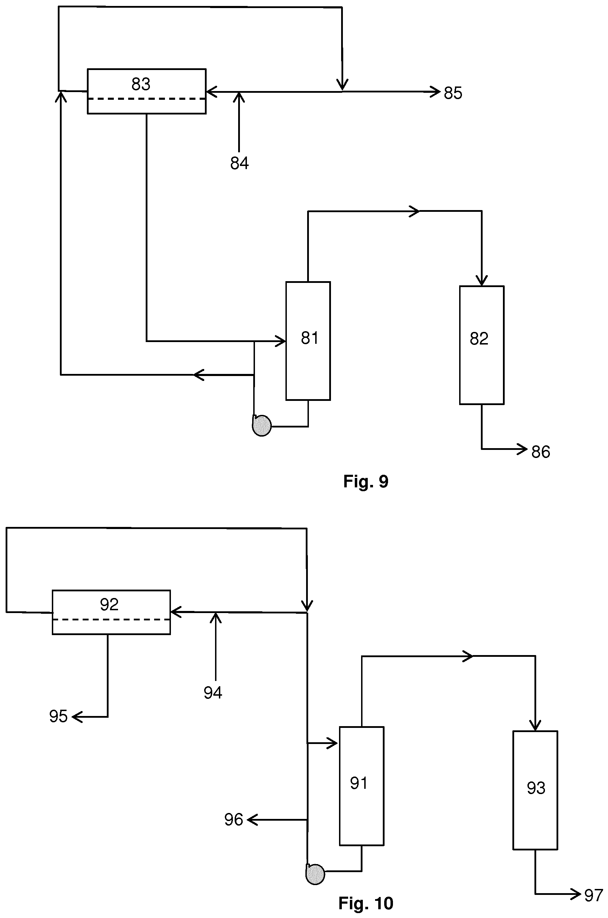

It is also possible to couple a step of membrane filtration, such as nanofiltration, with a step of evaporation. For instance, making reference to **Figure 9**, the concentration unit may comprise an evaporator 81 coupled to a condenser 82 and a nanofiltration system 83. A stream of eluent 84 is fed to the nanofiltration system 83. A stream of concentrated fatty acids 85 is recovered as part of the retentate stream from the nanofiltration system 83. The other part of the retentate stream from the nanofiltration system 83 is recycled to the nanofiltration system 83. The permeate stream from the nanofiltration system 83 is passed to the evaporator 81. The vapor phase from the evaporator 81 is passed to the condenser 82. A depleted stream of eluent 86 is recovered at the outlet of the condenser 82. Part of the liquid phase from the evaporator 81 is recycled to the evaporator 81, and part of the liquid phase from the evaporator 81 is mixed with the retentate stream from the nanofiltration system 83.

In another example, and making reference to **Figure 10**, the concentration unit may comprise an evaporator 91 coupled to a condenser 93 and a nanofiltration system 92. A stream of eluent 94 is fed to the nanofiltration system 92. A depleted stream of eluent 95 is recovered as the permeate stream from the nanofiltration system 92. Part of the retentate stream from the nanofiltration system 92 is recycled to the nanofiltration system 92 and part of it is further concentrated by being passed to the evaporator 91. The vapor phase from the evaporator 91 is passed to the condenser 93. Another depleted stream of eluent 97 is recovered at the outlet of the condenser 93. Part of the liquid phase from the evaporator 91 is recycled to the evaporator 91, and part of it is collected to form a stream of concentrated fatty acids 96.

### Variants of eluent recycling

According to the invention, a first stream of eluent enriched in the first (desired) PUFA and a second stream of eluent enriched in the second (undesirable) FA are obtained at the main step of chromatographic separation. According to the invention, at least the second stream of eluent is concentrated and recycled.

The first stream of eluent may also be concentrated (as shown in **Figure 1**) and recycled. At least 90%, preferably at least 99% and even more preferably at least 99.9% of this first stream of eluent can be recycled (notably to the main chromatographic unit), using any of the concentration techniques described above, or any other concentration technique known in the art (in view of the high boiling point of fatty acids such as PUFAs).

Turning now to the concentration and recycling of the second stream of eluent, the first solution of the invention is to perform the concentration step in such a way that the water-to-organic ratio in the depleted second stream of eluent (*i.e.* after the concentration) is less than the water-to-organic ratio in the second stream of eluent (*i.e.* before the concentration).

This can be achieved by adjusting the parameters of the concentration stage, since water has a different boiling point from that of the organic solvent(s) present in the eluent. Typically, the evaporation or distillation or other concentration method is performed only partially and not totally, so as to produce a vapor phase which is enriched in organic solvent and depleted in water (as well as in fatty acids) and is then collected to form the depleted second stream of eluent.

According to one embodiment, the water-to-organic ratio of the depleted second stream of eluent is reduced by about 1 to about 10% relative to the water-to-organic ratio of the second stream of eluent.

According to one embodiment, the water-to-organic ratio of the depleted second stream of eluent is reduced by about 10 to about 20% relative to the water-to-organic ratio of the second stream of eluent.

According to one embodiment, the water-to-organic ratio of the depleted second stream of eluent is reduced by about 20 to about 30% relative to the water-to-organic ratio of the second stream of eluent.

According to one embodiment, the water-to-organic ratio of the depleted second stream of eluent is reduced by about 30 to about 40% relative to the water-to-organic ratio of the second stream of eluent.

According to one embodiment, the water-to-organic ratio of the depleted second stream of eluent is reduced by about 40 to about 50% relative to the water-to-organic ratio of the second stream of eluent.

According to one embodiment, the water-to-organic ratio of the depleted second stream of eluent is reduced by about 50 to about 60% relative to the water-to-organic ratio of the second stream of eluent.

According to one embodiment, the water-to-organic ratio of the depleted second stream of eluent is reduced by about 60 to about 70% relative to the water-to-organic ratio of the second stream of eluent.

According to one embodiment, the water-to-organic ratio of the depleted second stream of eluent is reduced by about 70 to about 80% relative to the water-to-organic ratio of the second stream of eluent.

According to one embodiment, the water-to-organic ratio of the depleted second stream of eluent is reduced by about 80 to about 90% relative to the water-to-organic ratio of the second stream of eluent.

According to one embodiment, the water-to-organic ratio of the depleted second stream of eluent is reduced by about 90 to about 95% relative to the water-to-organic ratio of the second stream of eluent.

According to one embodiment, the water-to-organic ratio of the depleted second stream of eluent is reduced by more than about 95% relative to the water-to-organic ratio of the second stream of eluent.

According to one embodiment, the depleted second stream of eluent contains less than or equal to about 20% water, optionally less than or equal to about 10% water, preferably less than or equal to about 5% water, or less than or equal to about 2% water, or less than or equal to about 1 % water, or less than or equal to about 0.5% water, or less than or equal to about 0.1 % water, or less than or equal to about 0.05% water, or less than or equal to about 0.01%, or less than or equal to about 0.005% water, or less than or equal to about 0.001% water.

According to one embodiment, the debit rate of the depleted second stream of eluent is reduced by about 1 to about 5% relative to the debit rate of the second stream of eluent.

According to one embodiment, the debit rate of the depleted second stream of eluent is reduced by about 5 to about 10% relative to the debit rate of the second stream of eluent.

According to one embodiment, the debit rate of the depleted second stream of eluent is reduced by about 10 to about 20% relative to the debit rate of the second stream of eluent.

According to one embodiment, the debit rate of the depleted second stream of eluent is reduced by about 20 to about 30% relative to the debit rate of the second stream of eluent.

According to one embodiment, the debit rate of the depleted second stream of eluent is reduced by about 30 to about 40% relative to the debit rate of the second stream of eluent.

According to one embodiment, the debit rate of the depleted second stream of eluent is reduced by about 40 to about 50% relative to the debit rate of the second stream of eluent.

According to one embodiment, the debit rate of the depleted second stream of eluent is reduced by more than about 50% relative to the debit rate of the second stream of eluent.

The depleted second stream of eluent, owing to the reduction in its water-to-organic ratio relative to the second stream of eluent, contains a minimal or low level of entrained undesirable second FA, and preferably no entrained undesirable second FA. This depleted second stream of eluent can thus be recycled in part, or preferably totally, to the main chromatographic unit, for implementing the main step of chromatographic separation.

A make-up of (fresh) water may be provided in order to compensate for the depletion in water. Such addition of water may take place anywhere between the concentration step and the return of the stream to the main chromatographic unit. It may in particular take place before the depleted second stream of eluent in vapor form is condensed, or, preferably, after it is condensed.

The addition of water may bring the water-to-organic ratio of the stream back to the original value before the concentration step, or it may bring it to a different value.

An optional make-up of (fresh) organic solvent(s) may be provided as well.

The depleted second stream of eluent may be subjected to other sorts of treatment before being recycled and used in the main step of chromatographic separation.

The second solution of the invention consists in not recycling all of the depleted second stream of eluent to use it in the main chromatographic unit. According to this second solution, part of the depleted second stream of eluent is recycled to be used in another process step, for instance either as an eluent or as a fuel.

Thereby, the potentially entrained undesirable second FA does not compromise the efficiency of the main step of chromatographic separation, while the global cost of the operation of the plant is nevertheless not substantially increased.

It is still possible to recycle part of the depleted second stream of eluent to use it in the main step of chromatographic separation, provided that the proportion of depleted second stream of eluent which is recycled in this way remains below a certain threshold so that the level of contamination of the first PUFA by the second FA at the end of the main step of chromatographic separation remains below a certain limit. For instance, between 0 and 70%, or between about 0 and about 60%, or between about 0 and about 50%, or between about 0 and about 40%, or between about 0 and about 30%, or between about 0 and about 20%, or between about 0 and about 10% of the depleted second stream of eluent is recycled and used in the main step of chromatographic separation.

According to another embodiment, none of the depleted second stream of eluent is recycled and used in the main step of chromatographic separation. Most preferably, all of it is recycled and used in another process step.

The depleted second stream of eluent can be recycled and used in another step of the same process, or in a step of a different process, *e.g*. for producing a different product. This different process can be performed in the same installation or in a different installation (in which case the depleted second stream of eluent is stored and transported from one installation to the other).

For instance, the depleted second stream of eluent can be used to regenerate pure organic solvent from the stream in the same installation or in a remote location, such pure organic solvent being used partly or totally to feed the main chromatographic step, so that the overall cost of the process is not substantially affected.

According to a preferred embodiment, the process of the invention comprises recycling part or all of the depleted second stream of eluent to another separation unit upstream of the main chromatographic unit (to implement a preliminary separation step performed before the main step of chromatographic separation).

It should be noted that when reutilization of the used eluent as fuel is implemented, the concentration step becomes optional. Depending on the composition of the second stream of eluent, it may be possible to directly use it as a fuel without producing first a depleted second stream of eluent containing less fatty acids (or water).

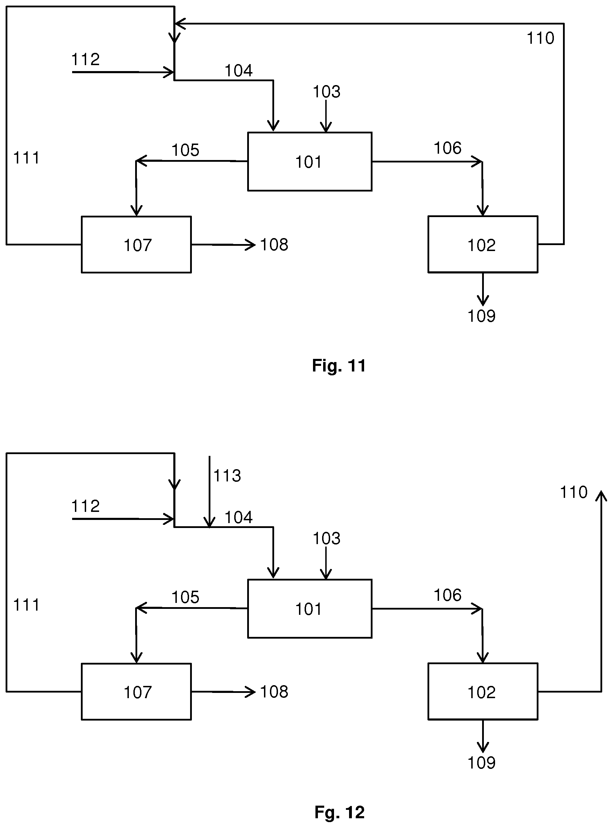

According to one embodiment which implements the first solution of the invention, and making reference to **Figure 11**, the process comprises a main step of chromatographic separation, which comprises treating an incoming stream 103 containing the first (desired) PUFA and the second (undesirable) FA in a main chromatographic unit 101, using a stream of eluent 104. A first stream of eluent 105 enriched in the first PUFA and a second stream of eluent 106 enriched in the second FA are collected at the outlet of the main chromatographic unit 101.

The first stream of eluent 105 is passed to a first concentration unit 107, and the second stream of eluent 106 is passed to a second concentration unit 102.

At the outlet of the first concentration unit 107, a first stream of concentrated fatty acids 108 (containing concentrated first PUFA and possibly further components) and a depleted first stream of eluent 111 are respectively collected. The depleted first stream of eluent 111 is recycled to the main chromatographic unit 101. Up to substantially all of the eluent contained in the first stream of eluent 104 can be recycled as the depleted first stream of eluent 111, and the water-to-organic ratio of the depleted first stream of eluent 111 can be substantially identical to the water-to-organic ratio of the first stream of eluent 104, since there is no contamination issue.

At the outlet of the second concentration unit 102, a second stream of concentrated fatty acids 109 (containing concentrated second FA and possibly further components) and a depleted second stream of eluent 110 are respectively collected. The depleted second stream of eluent 110 is recycled to the main chromatographic unit 101. The water-to-organic ratio of the depleted second stream of eluent 110 is lower than the water-to-organic ratio of the second stream of eluent 106. Correlatively, the second stream of concentrated fatty acids 109 contains residual eluent, having a water-to-organic ratio which is greater than the water-to-organic ratio of the second stream of eluent 106. For instance, the second stream of concentrated fatty acids 109 may contain residual water and substantially no organic solvent.

A make-up of water 112 is provided to compensate for the depletion of the recycled eluent in water. A make-up of organic solvent can be provided as well (not shown).

It should be noted that the incoming stream 103 may be the feed mixture, in case the process comprises one single separation step, or in case the process comprises several separation steps of which the main step of chromatographic separation illustrated here is the first one.

Similarly, the first stream of concentrated fatty acids 108 can be the final product of the process. Or, if the chromatographic separation step illustrated in **Figure 11** is followed by further separation steps, this stream is passed to the next separation stage, in order to separate the first PUFA from other components present in the stream.

**Figure 12** illustrates one variant not according to the invention, which implements the second solution of the invention. Numerals similar to those of **Figure 11** have the same meaning. The difference between this variant and the above-described embodiment of **Figure 11** is that the depleted second stream of eluent 110 is not recycled to the main chromatographic unit 101. Instead, this depleted second stream of eluent 110 is recycled to another separation unit upstream of the main chromatographic unit 101 (not shown). In this case, the water-to-organic ratio of the depleted second stream of eluent 110 may be identical (or not) to the water-to-organic ratio of the second stream of eluent 106; and the second stream of concentrated fatty acids 109 may contain substantially no eluent and in particular no water.

In this variant, the presence of make-up of fresh organic solvent 113 is necessary to compensate for the absence of recycling of the depleted second stream of eluent 110 to the main chromatographic unit 101. The make-up of water 112 and the make-up of organic solvent 113 can be replaced by a single make-up of eluent.

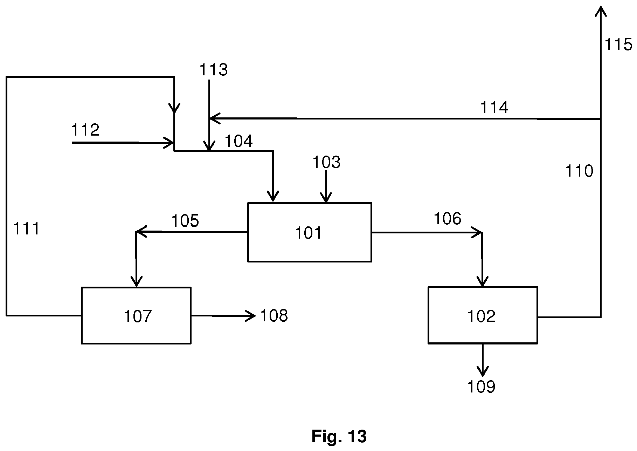

**Figure 13** illustrates another variant, which implements the second solution of the invention. Numerals similar to those of **Figure 11** have the same meaning. The difference between this variant and the above-described embodiment of **Figure 11** is that the depleted second stream of eluent 110 is divided into two parts. The first part 114 is recycled to the main chromatographic unit 101, while the second part 115 is not recycled to the main chromatographic unit 101. Instead, this second part 115 is recycled to another separation unit upstream of the main chromatographic unit 101 (not shown). In this case, the water-to-organic ratio of the depleted second stream of eluent 110 may be identical (or not) to the water-to-organic ratio of the second stream of eluent 106; and the second stream of concentrated fatty acids 109 may contain substantially no eluent and in particular no water.

In this variant, the presence of make-up of fresh organic solvent 113 is necessary to compensate for the absence of total recycling of the depleted second stream of eluent 110 to the main chromatographic unit 101. The make-up of water 112 and the make-up of organic solvent 113 can be replaced by a single make-up of eluent.

In case the water-to-organic ratio of the depleted second stream of eluent 110 is lower than the water-to-organic ratio of the second stream of eluent 106, this variant is also an embodiment of the first solution of the invention.

It should be noted that the depleted second stream of eluent can be recycled to a pool of eluent which feeds several separation units, notably several chromatographic units.

As a very general remark, it should be noted that the process of the invention can be implemented in a single installation, or in two or more distinct installations. Any streams described herein can then be stored and transported from one installation to the other so as to enable the process to be performed in its entirety. For instance, the separation unit(s) may be provided in one installation, while the concentration unit(s) (including e.g. one or more distillation columns) can be provided in another, distinct, installation.

The composition of various streams, and in particular the composition of the recycled eluent streams, such as the depleted second stream, may be analyzed on-line or off-line by adequate methods or devices, and re-adjusted batchwise or continuously using means known in the art.

### Preferred purification schemes

In a first preferred embodiment, one or several chromatography steps are used to purify a first PUFA (*e.g*. EPA) from a mixture of fatty acids. Particularly, the amount of a second FA (*e.g*. DHA) is reduced in the (final) purified stream containing the first PUFA to less than or equal to about 2%, preferably less than or equal to about 0.5%, preferably less than or equal to about 0.05%, preferably less than or equal to about 0.03%, more preferably to non detectable levels.

At least one of the chromatographic steps is aimed at separating the first PUFA from the second FA and preferably uses a mixture of water and methanol as eluent. The target fraction contains the first PUFA and contains reduced amounts of the second FA. The target fraction collected is concentrated by means of an evaporative or membrane technique such as a nanofiltration system, an evaporator, a distillation column or other appropriate means involving one technique or a combination of techniques known to those skilled in the art, such that the maximum amount of organic solvent is recycled into the chromatography process.

The preferred evaporative means is a falling film evaporator with forced circulation, operated under reduced pressure. The process also produces at least one waste fraction containing the second FA. In order to recycle the largest portion of eluent from a second stream without entraining the second FA, evaporative means are chosen and evaporation parameters are set such that a significant portion of water remains in the bottoms of the evaporator with the concentrated second FA. As a consequence, the distilled solvent mixture is enriched in the organic solvent compared to water, and the entrainment of the second FA in the solvent vapors is reduced to an acceptable level, enabling the recycling of the distillate in the same chromatographic unit.

Preferred means include a distillation column or a combination of a distillation column and a falling film evaporator with forced circulation. Alternatively, a membrane technique can be used to concentrate the second FA in the waste stream, and may be coupled with evaporative techniques to recycle a portion of the solvent mixture into the chromatography process.

In a second preferred embodiment, one or several chromatography steps are used to purify a first PUFA (*e.g*. EPA) from a mixture of fatty acids. Particularly, the amount of a second FA (*e.g*. DHA) is reduced in the purified stream containing the first PUFA to less than or equal to about 2%, preferably less than or equal to about 0.5%, preferably less than or equal to about 0.05%, preferably less than or equal to about 0.03%, more preferably to non-detectable levels.

At least one of the chromatographic steps is aimed at separating the first PUFA from the second FA and preferably uses a mixture of water and methanol as eluent. The target fraction contains the first PUFA and contains reduced amounts of the second FA. The target fraction is directly re-injected into a subsequent chromatography step to further purify the first PUFA. The process also produces at least one waste fraction containing the second FA.

In order to recycle the largest portion of eluent from a second stream containing the second FA without entraining the second FA, evaporative means are chosen and evaporation parameters are set such that a significant portion of water remains in the bottoms of the evaporator with the concentrated second FA. As a consequence, the distilled solvent mixture is enriched in the organic solvent compared to water, and the entrainment of the second FA in the solvent vapors is reduced to an acceptable level, enabling the recycling of the distillate in the same chromatographic unit.

Preferred means include a combination of a distillation column and a falling film evaporator with forced circulation. Alternately, a membrane technique can be used to concentrate the second FA in the waste stream, and may be coupled with evaporative techniques to recycle a portion of the solvent mixture into the chromatography process.

In a third preferred embodiment, one or several chromatography steps are used to purify a first PUFA (*e.g*. EPA) from a mixture of fatty acids. Particularly, the amount of a second FA (*e.g*. DHA) is reduced in the purified stream containing the first PUFA to less than or equal to about 2%, preferably less than or equal to about 0.5%, preferably less than or equal to about 0.05%, preferably less than or equal to about 0.03%, more preferably to non-detectable levels.

At least one of the chromatographic steps is aimed at separating the first PUFA from the second FA and preferably uses a mixture of water and methanol as eluent. The target fraction contains the first PUFA and contains reduced amounts of the second FA.

The target fraction collected is concentrated by means of an evaporative or membrane technique such as a nanofiltration system, an evaporator, a distillation column or other appropriate means involving one technique or a combination of techniques known to those skilled in the art, such that the maximum amount of organic solvent is recycled into the chromatography process. The preferred evaporative means is a falling film evaporator with forced circulation, operated under reduced pressure.

The process also produces at least one waste fraction containing the second FA. Solvent from that waste fraction is not recycled to that chromatographic step aimed at separating the first PUFA from the second FA.

In a fourth preferred embodiment, one or several chromatography steps are used to purify a first PUFA (*e.g*. EPA) from a mixture of fatty acids. Particularly, the amount of a second FA (*e.g*. DHA) is reduced in the purified stream containing the first PUFA to less than or equal to about 2%, preferably less than or equal to about 0.5%, preferably less than or equal to about 0.05%, preferably less than or equal to about 0.03%, more preferably to non-detectable levels.

At least one of the chromatographic steps is aimed at separating the first PUFA from the second FA and preferably uses a mixture of water and methanol as eluent. The target fraction contains the first PUFA and contains reduced amounts of the second FA. The target fraction is directly re-injected into a subsequent chromatography step without concentration to further purify the first PUFA. The process also produces at least one waste fraction containing the second FA. Solvent from that waste fraction is not recycled to that chromatographic step aimed at separating the first PUFA from the second FA.

### EXAMPLES

The following examples illustrate the invention without limitation.

### Example 1

A mixture of fatty acid ethyl esters obtained from fish oil (4 g) was dissolved in a 93/7 v/v mixture of methanol (144 g) and water (14.5 g), and then subjected to evaporation in a stirred reactor at 60°C. Two fractions of distillate F1 and F2 with a mass of 33.1 g and 45.1 g respectively were collected during evaporation at 0.6 bar abs, one fraction F3 with a mass of 32.9 g was collected during evaporation at 0.55 bar abs, and one fraction F4 with a mass of 18.9 g was collected during evaporation at 0.05 bar abs. Analysis of the water content and the fatty acid ester content of the evaporated fractions is provided in table 1 below.

**Table 1: evaporation of a mixture of methanol and water in the presence of a fatty acid ester mixture**

| **Fraction** | **Temperature (°C)** | **Pressure (bar)** | **Mass recovered** | **Water % (w/w)** | **Fatty acid ester content (ppm)** |
|---|---|---|---|---|---|
| F1 | 60 | 0.6 | 33.1 | 1.78 | Not detected |
| F2 | 60 | 0.6 | 45.1 | 3.25 | Not detected |
| F3 | 60 | 0.55 | 32.9 | 5.09 | Not detected |
| F4 | 60 | 0.05 | 18.9 | 19.99 | 27 |
| bottoms | | | 6.4 | 41.26 | Not determined |

Table 1 shows that no detectable amounts of fatty acids are entrained with low amounts of water (less or equal to 5% w/w) in the distillate, and that substantial entrainment (27 ppm) occurs with higher water content in the distillate (20% w/w).

The fatty acid composition of the initial mixture and the fatty acid composition of fraction F4 are analyzed by GC chromatography. The results are provided in Table 2 below.

**Table 2 : composition of entrained fatty acids compared with feed composition before evaporation**

| **Identification of fatty acids** | **Retention time (min.)** | **Initial mixture (surf.%)** | **Fraction F4 (surf.%)** |
|---|---|---|---|
| | 6.904 | 0.29 | |
| C16-0 | 8.985 | 3.11 | 14.65 |
| C16-1 | 9.302 | 1.20 | 4.99 |
| | 10.094 | 0.19 | |
| | 10.17 | 0.21 | |
| | 10.344 | 0.23 | |
| | 10.551 | 0.19 | |
| | 11.097 | 0.16 | |
| C16-4ω1 | 11.428 | 0.37 | |
| C18-0 | 11.958 | 3.59 | 9.48 |
| C18-1ω9 | 12.267 | 7.23 | 20.32 |
| C18-1ω7 | 12.394 | 2.71 | 7.61 |
| C18-2ω6 | 13.045 | 0.90 | |
| | 13.44 | 0.38 | |
| | 13.548 | 0.19 | |
| C18-3ω3 | 14.238 | 0.63 | |
| C18-4ω3 | 14.793 | 2.51 | 4.59 |
| | 15.037 | 0.20 | |
| | 15.68 | 0.48 | |
| C20-1 | 16.043 | 1.11 | |
| | 16.221 | 0.69 | |
| | 16.578 | 0.25 | |
| | 17.000 | 0.37 | |
| | 17.487 | 0.42 | |
| C20-4ω6 | 17.902 | 2.04 | |
| | 18.36 | 0.19 | |
| C20-4ω3 | 18.896 | 1.67 | |
| | 19.014 | 0.29 | |
| C20-5ω3 (EPA) | 19.39 | 34.12 | 27.97 |
| | 19.874 | 0.21 | |
| | 20.128 | 0.22 | |
| | 20.274 | 0.34 | |
| | 20.485 | 0.28 | |
| C21-5ω3 | 21.671 | 1.88 | |
| | 22.316 | 0.19 | |
| | 22.433 | 0.20 | |
| C22-5ω6 | 22.858 | 0.75 | |
| C22-5ω3 | 23.794 | 4.68 | |
| C22-6ω3 (DHA) | 24.384 | 24.95 | 10.37 |
| | 24.653 | 0.39 | |
| TOTAL | | 100 | 99.98 |

Table 2 shows that the composition of the entrained oil in F4 is enriched in shorter chain fatty acids compared with longer chain fatty acids, demonstrating that a thermodynamic entrainment occurs when increasing amounts of water are evaporated.

### Example 2

In this example, a mixture of pre-purified omega-3 PUFAs containing approx. 70% EPA and approximately 10% DHA, was obtained using a VARICOL™ multicolumn chromatography apparatus whose columns were packed with C18 20 µm reversed phase silica, at a total concentration of 62 g/l in a mobile phase containing approximately 90% of acetone and 10% of water (volume per volume). This mixture was concentrated continuously in a single evaporation step using a multi-tube evaporator with forced recirculation as described in **Figure 2**:
- Dilute PUFA solution flow rate: 96 l/h
- Temperature of heating fluid: approx. 100°C
- Temperature of evaporation: approx. 75°C
- Evaporation pressure : approx. 250 mbar
- Flow rate of concentrated stream outlet : 6 l/h

The PUFA mixture was injected into the evaporation device, comprising the multi-tube evaporator with forced recirculation 11. The concentrated PUFA mixture was collected via line 15, while the evaporated solvents were condensed in the condenser 12 and collected via line 16.

The concentrated PUFA mixture exiting the evaporator contained approx. 0.2 % of water and 1 % of acetone. The mixture of evaporated solvents recovered in line 16 contained 30 to 100 ppm of fatty acid esters. More than 99% of solvent was recovered and recycled in the same purification step in the process.

### Example 3a

In this example, a mixture of pre-purified omega-3 PUFAs containing approx. 70% EPA and approximately 10% DHA was purified using a VARICOL™ multicolumn chromatography apparatus equipped with 5 columns of 20.2 cm internal diameter and 8.5 cm length packed with C18 20 µm reversed phase silica with a mobile phase containing approximately 93% of methanol and 7% of water (volume per volume), and residual amount of DHA in the eluent was approx. 0.1 ppm. Operating conditions were as follows:
- Feed rate: 1.5 l/h
- Eluent rate: 279 l/h
- Extract rate: 226 l/h
- Raffinate rate: 54.5 l/h
- Operating temperature: 35°C

The target raffinate stream contained purified EPA at a GC purity of approx. 92% and less than 0.03% DHA, at a total concentration of 19 g/l. This mixture was concentrated continuously in a single continuous evaporator using a multi-tube evaporator with forced recirculation as described in **Figure 2**. Operating conditions were as follows:
- Dilute PUFA solution flow rate: 54.5 l/h
- Temperature of heating fluid: approx. 100°C
- Temperature of evaporation: approx. 75°C
- Evaporation pressure : approx. 250 mbar
- Flow rate of concentrated stream outlet: 6 l/h

The concentrated PUFA mixture exiting the evaporator contained approx. 0.04 % of water and 0.6 % of methanol. More than 99% of solvent from the raffinate stream was recovered and was recycled in the same purification step in the process of the invention.

The extract stream containing DHA at a GC purity of approx. 36% and a total fatty acid ester concentration of approx. 1.7 g/l was partially concentrated in a continuous evaporation device similar as the one described in **Figure 2**. Operating conditions were as follows:
- Dilute PUFA solution flow rate: 226 l/h
- Temperature of heating fluid: approx. 100°C
- Temperature of evaporation: approx. 70°C
- Evaporation pressure : approx. 1000 mbar
- Flow rate of concentrated stream outlet: 40 l/h

The concentrated mixture exiting the evaporator contained approx. 40% water and 60 % of methanol. Only approx. 82% of solvent from the extract stream was recovered and was recycled in the same purification step in the process of the invention.

The distilled eluent collected from both extract and raffinate evaporators contained approx. 93.2% of methanol, approx. 12 ppm of fatty acid esters and only 0.1 ppm of DHA, and was recycled in the chromatography process.

### Example 3b (comparative)

In this example, the influence of DHA in the recycled eluent was estimated by computer simulation. A mixture of pre-purified omega-3 PUFAs containing approx. 70% EPA and approximately 10% DHA was purified using a VARICOL™ multicolumn chromatography apparatus equipped with 5 columns of 20.2 cm internal diameter and 8.5 cm length packed with C18 20 µm reversed phase silica with a mobile phase containing approximately 93% of methanol and 7% of water (volume per volume), and DHA in the eluent was approx. 20 ppm. Operating conditions were as follows:
- Feed rate: 1.5 l/h
- Eluent rate: 279 l/h
- Extract rate: 226 l/h
- Raffinate rate: 54.5 l/h
- Operating temperature: 35°C

The target raffinate stream contained purified EPA at a GC purity of approx. 92% and approx. 0.12% DHA, at a total concentration of 19 g/l. The impact of 20 ppm of DHA in an eluent stream obtained from complete concentration of both extract and raffinate streams is approx. 0.1% DHA in the purified EPA stream.

## Claims

1. A process for recovering a first polyunsaturated fatty acid or polyunsaturated fatty acid derivative from a feed mixture, wherein the feed mixture comprises at least a second fatty acid or fatty acid derivative in addition to the first polyunsaturated fatty acid or polyunsaturated fatty acid derivative, the process comprising:
- performing a main step of chromatographic separation using an aqueous organic eluent and thereby collecting a first stream of eluent enriched in the first polyunsaturated fatty acid or polyunsaturated fatty acid derivative and a second stream of eluent enriched in the second fatty acid or fatty acid derivative;
- subjecting the second stream of eluent to a partial concentration step so as to obtain a stream of concentrated fatty acids or fatty acid derivatives on the one hand and a depleted second stream of eluent on the other hand, wherein the water-to-organic weight ratio of the depleted second stream of eluent is lower than the water-to-organic weight ratio of the second stream of eluent;
- recycling at least part of the depleted second stream of eluent for use in the main step of chromatographic separation.

2. The process of claim 1, wherein the water-to-organic weight ratio of the depleted second stream of eluent is lower than 0.95 times the water-to-organic weight ratio of the second stream of eluent, preferably lower than 0.9 times, or less than 0.8 times, or less than 0.7 times, or lower than 0.6 times, or lower than 0.5 times, or lower than 0.4 times, or lower than 0.3 times, or lower than 0.2 times, or lower than 0.1 times the water-to-organic weight ratio of the second stream of eluent.

3. The process of claim 1 or 2, comprising:
- subjecting the first stream of eluent to a concentration step so as to obtain a stream of concentrated fatty acids or fatty acid derivatives on the one hand and a depleted first stream of eluent on the other hand, and
- recycling at least part of, preferably all of, the depleted first stream of eluent, preferably for use in the main step of chromatographic separation.

4. The process of any one of claims 1 to 3, which comprises a single step of separation, namely the main step of chromatographic separation.

5. The process of any one of claims 1 to 3, which comprises a single preliminary step of separation before the main step of chromatographic separation, said single preliminary step of separation being preferably a preliminary step of chromatographic separation, wherein said single preliminary step of chromatographic separation and the main step of chromatographic separation are performed either in a same chromatographic unit or in different chromatographic units.

6. The process of any one of claims 1 to 3 or 5, which comprises a single further step of separation after the main step of chromatographic separation, said single further step of separation being preferably a further step of chromatographic separation, wherein said single further step of chromatographic separation and the main step of chromatographic separation are performed either in a same chromatographic unit or in different chromatographic units.

7. The process of any of claims 1 to 3, consisting essentially of three or more steps of chromatographic separations, preferably three steps of chromatographic separations, said steps of chromatographic separations being performed in different chromatographic units or at least partially in a same chromatographic unit.

8. The process of any one of claims 1 to 7, which comprises adding fresh water to the depleted second stream of eluent prior to recycling and using it in the main step of chromatographic separation.

9. The process of any one of the preceding claims wherein:
- the first polyunsaturated fatty acid or polyunsaturated fatty acid derivative is recovered at the end of the process as a composition containing less than 1 wt.%, preferably less than 0.5 wt.% or less than 0.1 wt.% or less than 0.05 wt.% or less than 0.03 wt.% or less than 0.01 wt.% of the second fatty acid or fatty acid derivative relative to the total weight of fatty acids or fatty acid derivatives in the composition; and/or
- the first polyunsaturated fatty acid or polyunsaturated fatty acid derivative is eicosapentaneoic acid or a derivative thereof and the second fatty acid or fatty acid derivative is docosahexanoic acid or a derivative thereof.

## Patentansprüche

1. Verfahren zur Rückgewinnung einer ersten mehrfach ungesättigten Fettsäure oder eines mehrfach ungesättigten Fettsäurederivats davon von einer Materialdurchsatzmischung, wobei die Materialdurchsatzmischung zusätzlich zu der ersten mehrfach ungesättigten Fettsäure oder dem mehrfach ungesättigten Fettsäurederivat davon wenigstens eine zweite Fettsäure oder ein Fettsäurederivat davon umfasst, wobei das Verfahren Folgendes umfasst:
- Durchführen eines Hauptschritts der chromatographischen Abscheidung unter Verwendung eines wässrigen, organischen Eluents und somit das Aufsammeln eines ersten Eluentstroms, der mit der ersten mehrfach ungesättigten Fettsäure oder dem mehrfach ungesättigtem Fettsäurederivat davon angereichert ist und eines zweiten Eluentstroms, der in der zweiten Fettsäure oder dem Fettsäurederivat davon angereichert ist;
- Aussetzen des zweiten Eluentstroms an einen unvollständigen Konzentrationsschritt, um einen Strom aus konzentrierten Fettsäuren oder Fettsäurederivaten davon einerseits und einen aufgebrauchten zweiten Eluentstrom andererseits zu erhalten, wobei das Wasser-zu-organischem Gewichtsverhältnis des aufgebrauchten zweiten Eluentstroms niedriger liegt, als das Wasser-zu-organischem Gewichtsverhältnis des zweiten Eluentstroms;
- Rückgewinnung wenigstens eines Teils des aufgebrauchten zweiten Eluentstroms zur Verwendung in dem Hauptschritt der chromatographischen Abscheidung.

2. Verfahren nach Anspruch 1, wobei das Wasser-zu-organischem Gewichtsverhältnis des aufgebrauchten zweiten Eluentstroms niedriger als 0,95 Mal des Wasser-zu-organischem Gewichtsverhältnisses des zweiten Eluentstroms, bevorzugt niedriger als 0,9 Mal oder weniger als 0,8 Mal oder weniger als 0,7 Mal oder niedriger als 0,6 Mal oder niedriger als 0,5 Mal oder niedriger als 0,4 Mal oder niedriger als 0,3 Mal oder niedriger als 0,2 Mal oder niedriger als 0,1 Mal des Wasser-zu-organischem Gewichtsverhältnis des zweiten Eluentstroms liegt.

3. Verfahren nach Anspruch 1 oder 2, umfassend:
- Aussetzen des ersten Eluentstroms an einen Konzentrationsschritt, um einen Storm konzentrierter Fettsäuren oder Fettsäurederivaten davon einerseits und einen aufgebrauchten zweiten Eluentstrom andererseits zu erhalten und
- Rückgewinnung wenigstens eines Teils des aufgebrauchten zweiten Eluentstroms oder die Gesamtmenge davon, bevorzugt zur Verwendung in dem Hauptschritt der chromatographischen Abscheidung.

4. Verfahren nach einem der Ansprüche 1 bis 3, umfassend einen einzigen Schritt der Abscheidung, nämlich den Hauptschritt der chromatographischen Abscheidung.

5. Verfahren nach einem der Ansprüche 1 bis 3, umfassend einen einzigen Vorbereitungsschritt vor dem Hauptschritt der chromatographischen Abscheidung, wobei der einzige Vorbereitungsschritt der Abscheidung bevorzugt ein Vorbereitungsschritt der chromatographischen Abscheidung ist, wobei der einzige Vorbereitungsschritt der chromatographischen Abscheidung und der Hauptschritt der chromatographischen Abscheidung entweder in derselben Chromatographievorrichtung oder in verschiedenen Chromatographievorrichtungen durchgeführt werden.

6. Verfahren nach einem der Ansprüche 1 bis 3 oder 5, umfassend einen einzigen weiteren Schritt der Abscheidung nach dem Hauptschritt der chromatographischen Abscheidung, wobei der einzige weitere Schritt der Abscheidung bevorzugt ein weiterer Schritt der chromatographischen Abscheidung ist, wobei der einzige weitere Schritt der chromatographischen Abscheidung und der Hauptschritt der chromatographischen Abscheidung entweder in derselben Chromatographievorrichtung oder in verschiedenen Chromatographievorrichtungen durchgeführt werden.

7. Verfahren nach einem der Ansprüche 1 bis 3, bestehend im Wesentlichen aus drei oder mehr Schritten von chromatographischen Abscheidungen, bevorzugt aus drei Schritten von chromatographischen Abscheidungen, wobei die Schritte der chromatographischen Abscheidungen in verschiedenen Chromatographievorrichtungen oder zumindest teilweise in einer gleichen Chromatographievorrichtung durchgeführt werden.

8. Verfahren nach einem der Ansprüche 1 bis 7, umfassend das Zusetzen von frischem Wasser zu dem aufgebrauchten zweiten Eluentstrom vor der Wiedergewinnung und die Verwendung desselben in dem Hauptschritt der chromatographischen Abscheidung.

9. Verfahren nach einem der vorgehenden Ansprüche, wobei:
- die erste mehrfach ungesättigte Fettsäure oder das mehrfach ungesättigte Fettsäurederivat davon am Ende des Verfahrens als eine Zusammensetzung rückgewonnen wird, die weniger als 1 Gew.-%, bevorzugt weniger als 0,5 Gew.-% oder weniger als 0,1 Gew.-% oder weniger als 0,05 Gew.-% oder weniger als 0,03 Gew.-% oder weniger als 0,01 Gew.-% der zweiten Fettsäure oder des Fettsäurederivats davon relativ zum Gesamtgewicht von Fettsäuren oder Fettsäurederivaten davon in der Zusammensetzung rückgewonnen wird; und/oder
- die erste mehrfach ungesättigte Fettsäure oder das mehrfach ungesättigte Fettsäurederivat davon Eicosapentansäure oder ein Derivat davon ist und die zweite Fettsäure oder das Fettsäurederivat davon Docosahexansäure oder ein Derivat davon ist.

## Revendications

1. Procédé de récupération d'un premier acide gras polyinsaturé ou dérivé d'acide gras polyinsaturé à partir d'un mélange d'alimentation, dans lequel le mélange d'alimentation comprend au moins un second acide gras ou dérivé d'acide gras outre le premier acide gras polyinsaturé ou dérivé d'acide gras polyinsaturé, le procédé comprenant :
- la réalisation d'une étape principale de séparation chromatographique à l'aide d'un éluant organique aqueux et ainsi la collecte d'un premier courant d'éluant enrichi en le premier acide gras polyinsaturé ou dérivé d'acide gras polyinsaturé et d'un second courant d'éluant enrichi en le second acide gras ou dérivé d'acide gras ;
- l'exposition du second courant d'éluant à une étape de concentration partielle de manière à obtenir un courant d'acides gras ou de dérivés d'acides gras concentrés d'une part et un second courant d'éluant appauvri d'autre part, le rapport pondéral de l'eau aux composés organiques du second courant d'éluant appauvri étant inférieur au rapport pondéral de l'eau aux composés organiques du second courant d'éluant ;
- le recyclage d'au moins une partie du second courant d'éluant appauvri en vue de l'utilisation dans l'étape principale de séparation chromatographique.

2. Procédé selon la revendication 1, dans lequel le rapport pondéral de l'eau aux composés organiques du second courant d'éluant appauvri est inférieur à 0,95 fois le rapport pondéral de l'eau aux composés organiques du second courant d'éluant, de préférence inférieur à 0,9 fois, ou inférieur à 0,8 fois, ou inférieur à 0,7 fois, ou inférieur à 0,6 fois, ou inférieur à 0,5 fois, ou inférieur à 0,4 fois, ou inférieur à 0,3 fois, ou inférieur à 0,2 fois, ou inférieur à 0,1 fois le rapport pondéral de l'eau aux composés organiques du second courant d'éluant.

3. Procédé selon la revendication 1 ou 2, comprenant :
- l'exposition du premier courant d'éluant à une étape de concentration de manière à obtenir un courant d'acides gras ou de dérivés d'acides gras concentrés d'une part et un premier courant d'éluant appauvri d'autre part, et
- le recyclage d'au moins une partie, de préférence de la totalité, du premier courant d'éluant appauvri, de préférence en vue de l'utilisation dans l'étape principale de séparation chromatographique.

4. Procédé selon l'une quelconque des revendications 1 à 3, qui comprend une étape de séparation unique, à savoir l'étape principale de séparation chromatographique.

5. Procédé selon l'une quelconque des revendications 1 à 3, qui comprend une étape préliminaire de séparation unique avant l'étape principale de séparation chromatographique, ladite étape préliminaire de séparation unique étant de préférence une étape préliminaire de séparation chromatographique, dans lequel ladite étape préliminaire de séparation chromatographique unique et l'étape principale de séparation chromatographique sont réalisées soit dans un même élément chromatographique soit dans différents éléments chromatographiques.

6. Procédé selon l'une quelconque des revendications 1 à 3 ou 5, qui comprend une étape supplémentaire de séparation unique après l'étape principale de séparation chromatographique, ladite étape supplémentaire de séparation unique étant de préférence une étape supplémentaire de séparation chromatographique, dans lequel ladite étape supplémentaire de séparation chromatographique unique et l'étape principale de séparation chromatographique sont réalisées soit dans un même élément chromatographique soit dans différents éléments chromatographiques.

7. Procédé selon l'une quelconque des revendications 1 à 3, essentiellement constitué de trois étapes de séparation chromatographique ou plus, de préférence trois étapes de séparation chromatographique, lesdites étapes de séparation chromatographique étant réalisées dans différents éléments chromatographiques ou au moins partiellement dans un même élément chromatographique.

8. Procédé selon l'une quelconque des revendications 1 à 7, qui comprend l'ajout d'eau fraîche au second courant d'éluant appauvri avant son recyclage et son utilisation dans l'étape principale de séparation chromatographique.

9. Procédé selon l'une quelconque des revendications précédentes dans lequel :
- le premier acide gras polyinsaturé ou dérivé d'acide gras polyinsaturé est récupéré à la fin du procédé sous la forme d'une composition contenant moins de 1 % en poids, de préférence moins de 0,5 % en poids ou moins de 0,1 % en poids ou moins de 0,05 % en poids ou moins de 0,03 % en poids ou moins de 0,01 % en poids du second acide gras ou dérivé d'acide gras par rapport au poids total des acides gras ou dérivés d'acides gras de la composition ; et/ou
- le premier acide gras polyinsaturé ou dérivé d'acide gras polyinsaturé est l'acide éicosapentanéoïque ou un dérivé de celui-ci et le second acide gras ou dérivé d'acide gras est l'acide docosahexanoïque ou un dérivé de celui-ci.
